# EUROPÄISCHE PATENTSCHRIFT

(11) **EP 2 326 430 B1**
(45) Veröffentlichungstag und Bekanntmachung des Hinweises auf die Patenterteilung: **13.01.2016**
(21) Anmeldenummer: 09777848.4
(22) Anmeldetag: 13.08.2009
(51) Int. Cl.: B05B 15/12

(54) **VORRICHTUNG ZUM ABSCHEIDEN VON LACK-OVERSPRAY**
DEVICE FOR SEPARATING PAINT OVERSPRAY
DISPOSITIF DE SÉPARATION DU BROUILLARD DE PEINTURE EXCÉDENTAIRE

(30) Priorität: 04.09.2008 DE 102008046414
(43) Veröffentlichungstag der Anmeldung: 01.06.2011
(73) Patentinhaber: Eisenmann SE, 71032 Böblingen (DE)
(72) Erfinder: SWOBODA, Werner, 71032 Böblingen (DE); HIHN, Erwin, 72141 Walddorfhäslach (DE); LINK, Kersten, 71120 Grafenau (DE); KOCHER, Gert Eberhard, 71069 Sindelfingen (DE)
(74) Vertreter: Heinrich, Hanjo
(86) Internationale Anmeldenummer: PCT/EP2009/005865
(87) Internationale Veröffentlichungsnummer: WO 2010/025812

(56) Entgegenhaltungen:
- DE-A1- 4 123 285
- DE-A1- 19 758 451
- US-B1- 7 022 186

## Beschreibung

Die Erfindung betrifft eine Vorrichtung zum Abscheiden von Lack-Overspray aus der mit Overspray beladenen Kabinenabluft von Lackieranlagen mit
a) mindestens einer Abscheidefläche, an welcher die Kabinenabluft entlang führbar ist und welche mit einem Pol einer Hochspannungsquelle verbunden ist;
b) einer im Luftstrom angeordneten Elektrodeneinrichtung, welche der Abscheidefläche zugeordnet und mit dem anderen Pol der Hochspannungsquelle verbunden ist;
c) Mitteln, mit welchen der abgeschiedene Lack-Overspray von der Abscheidefläche abtransportiert wird.

Siehe nächster Stand der Technik DE 197 58 451.

Bei der manuellen oder automatischen Applikation von Lacken auf Gegenstände wird ein Teilstrom des Lackes, der im Allgemeinen sowohl Festkörper als auch Lösemittel und/oder Bindemittel enthält, nicht auf den Gegenstand appliziert. Dieser Teilstrom wird in.der Fachwelt "Overspray" genannt. Der Overspray wird von dem Luftstrom in der Spritzkabine erfasst und einer Abscheidung zugeführt.

Insbesondere bei Anlagen mit größerem Lackverbrauch, bei-spielsweise bei Anlagen zum Lackieren von Fahrzeugkarosserien, kommen bevorzugt Nassabscheidesysteme zum Einsatz. Bei vom Markt her bekannten Nassabscheidern fließt Wasser gemeinsam mit der von oben kommenden Kabinenabluft zu einer die Luftströmung beschleunigenden Düse. In dieser Düse findet eine Verwirbelung der durchströmenden Kabinenabluft mit dem Wasser statt. Bei diesem Vorgang treten die Overspraypartikel weitgehend in das Wasser über, so dass die Luft den Nassabscheider im Wesentlichen gereinigt verlässt und sich die Lack-Overspraypartikel in dem Wasser befinden. Aus diesem können sie dann wiedergewonnen oder entsorgt werden.

Bei bekannten Nassabscheidern wird verhältnismäßig viel Energie zur Umwälzung der erforderlichen recht großen Wassermengen benötigt. Die Aufbereitung des Spülwassers ist durch den hohen Einsatz an lackbindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat.

Bei vom Markt her bekannten Vorrichtungen der eingangs genannten Art wird demgegenüber auf trockenem Wege abgeschieden, indem von der vorbeiströmenden Kabinenabluft mitgeführte Lack-Overspraypartikel durch die Elektrodeneinrichtung ionisiert werden und auf Grund des zwischen der Abscheidefläche und der Elektrodeneinrichtung aufgebauten elektrischen Feldes zur Abscheidefläche wandern, an welcher sie sich abscheiden. Die an der Abscheidefläche haftenden Lack-Overspraypartikel können dann beispielsweise mechanisch von dieser abgestreift und abtransportiert werden.

Die Reinigungswirkung derartiger Abscheider ist sehr hoch. Für einen kontinuierlichen Betrieb muss jedoch stets dafür gesorgt werden, dass sich zwischen der Abscheidefläche und der Elektrodeneinrichtung ein ausreichend starkes elektrisches Feld ausbilden kann, was nur bis zu einer gewissen Schichtdicke von Lack-Overspray auf der Abscheidefläche möglich ist, da eine solche Schicht isolierend wirkt. Die erforderliche kontinuierliche Entfernung des Lack-Oversprays von der Abscheidefläche ist jedoch mit baulich recht aufwändigen Maßnahmen verbunden und kann störanfällig sein.

Aufgabe der vorliegenden Erfindung ist es daher, eine Abscheidevorrichtung der eingangs genannten Art zu schaffen, bei welcher der Abtransport von Lack-Overspray von der Abscheidefläche verbessert und vereinfacht ist.

Diese Aufgabe wird bei einer Vorrichtung der eingangs genannten Art dadurch gelöst, dass
d) die Mittel zum Abtransport des Lack-Oversprays von der Abscheidefläche eine Abscheideflüssigkeit umfassen, welche von oben nach unten über die Abscheidefläche fließt;
e) eine Abgabeeinrichtung mit einer nach oben offenen Rinne vorhanden ist, aus welcher dieser zugeführte Abscheideflüssigkeit entlang deren Längserstreckung austritt, wenn der Pegel der Abscheideflüssigkeit in der Rinne einen Austrittspegel überschreitet, und so zu der Abscheidefläche gelangt, dass die Abscheideflüssigkeit an der Abscheidefläche als weitgehend zusammenhängende Schicht herab fließt.

Erfindungsgemäß wird also der Vorteil einer guten Abscheidung von Lack-Overspray aus Kabinenabluft über ein elektrisches Feld mit dem guten Transport von Lack-Overspray in einer Flüssigkeit kombiniert, wobei gleichzeitig dafür gesorgt wird, dass die Abscheideflüssigkeit als weitgehend zusammenhängende Schicht an der Abscheidefläche herab fließt.

Letzteres ist besonders wichtig, da ansonsten Flächenbereiche der Abscheidefläche zumindest zeitweise freiliegen und nicht von Abscheideflüssigkeit bedeckt sind. An diesen freiliegenden Flächenbereichen kann sich jedoch Lack-Overspray abscheiden. Im Laufe der Zeit kann sich so über die gesamte Abscheidefläche eine isolierende Schicht ausbilden, was die Reinigungswirkung der Abscheidevorrichtung stark herabsetzen und wiederholt eine manuelle Reinigung erforderlich machen würde.

Durch die Abgabeeinrichtung wird eine besonders gleichmäßige Zufuhr der Abscheideflüssigkeit erreicht, wodurch die Ausbildung einer zusammenhängenden Schicht an der Abscheidefläche stark unterstützt wird.

Vorteilhafte Weiterbildungen der Erfindung sind in den abhängigen Ansprüchen angegeben.

Es ist günstig, wenn die Abgabeeinrichtung eine der Rinne zugeordnete und parallel zu dieser verlaufende Ablauffläche umfasst, über welche die aus der Rinne austretende Abscheideflüssigkeit seitlich in Richtung auf die Abscheidefläche abfließt. Auf der Ablauffläche kann sich bereits eine zur Abscheidefläche fließende zusammenhängende Schicht ausbilden.

Dabei ist es vorteilhaft, wenn die Ablauffläche entlang der Rinne in deren Rand übergeht. Dadurch sind den Strom der Abscheidflüssigkeit auseinander reißende Einflüsse beim Übergang von der Rinne zur Ablauffläche vermieden.

Es ist außerdem von Vorteil, wenn die Ablauffläche einen ersten Abschnitt aufweist, welcher nach außen und oben geneigt ist und in einen zweiten Abschnitt übergeht, der in einer horizontalen Ebene verläuft. Durch den ersten Abschnitt wird der Querschnitt des Raumes, den die Abscheideflüssigkeit durchströmen muss, erweitert. Dadurch die Fließgeschwindigkeit der Abscheideflüssigkeit dort lokal verringert. Wenn die Abscheideflüssigkeit dann mit verringerter Geschwindigkeit auf den horizontalen zweiten Abschnitt der Ablauffläche fließt, kann sich dort gut eine zusammenhängende Schicht derselben bilden.

Der Strom der Abscheideflüssigkeit wird nochmals beruhigt und die Ausbildung einer zusammenhängenden Schicht aus dieser unterstützt, wenn die Abscheidefläche ein Bürstenelement trägt.

Bei einer Variante der Abgabeeinrichtung, mit welcher gute Ergebnisse erzielt wurden, sind oberhalb der Ränder der Rinne im Wesentlichen vertikale Wände so angeordnet, dass dazwischen jeweils ein in Längsrichtung der Rinne verlaufender Schlitz verbleibt.

Bei einer Abwandlung der Abgabeeinrichtung, die ebenfalls zufriedenstellende Resultate brachte, verjüngt sich die Rinne nach oben zu einem Auslaufschlitz, wobei im Strömungsweg der Abscheideflüssigkeit zum Auslaufschlitz eine Engstelle vorgesehen ist, so dass die Abscheideflüssigkeit dort beschleunigt und verwirbelt wird.

Eine Vergleichmäßigung des Stromes der Abscheideflüssigkeit und damit die Ausbildung und Aufrechterhaltung einer zusammenhängenden Schicht aus dieser kann auch dadurch erreicht werden, dass die Rinne und/oder die zugeordnete Ablauffläche mit einer Rillenstruktur, vorzugsweise aus einem Kunststoff- oder Gummimaterial, versehen ist, deren Rillen sich in Längsrichtung der Rinne erstrecken.

Besonders gute Ergebnisse im Hinblick auf die Bildung einer zusammenhängenden Schicht aus Abscheideflüssigkeit wurde mit einer Abgabeeinrichtung erzielt, welche wenigstens eine in die Rinne hineinragende Walze umfasst, die um eine parallel zur Längsrichtung der Rinne verlaufende Drehachse verdrehbar ist, so dass in der Rinne befindliche Abscheideflüssigkeit von der sich drehenden Walze nach oben mitgeführt wird, wobei die Ablauffläche die Oberfläche eines Abstreifelements, insbesondere eines Federblechs, ist, welches in Längsrichtung der Walze so an deren Außenmantelfläche anliegt, dass von der Walze mitgeführte Abscheideflüssigkeit abgestreift wird und über die Oberfläche des Abstreifelements in Richtung auf die Abscheidefläche abfließt.

Es ist günstig, wenn die Abscheideflüssigkeit der Rinne unterhalb des Austrittspegels zugeführt wird. So kann beispielsweise eine strömungsberuhigte Zufuhr von unten erfolgen, bezogen auf den durch die Rinne bzw. die Abgabeeinrichtung vorgegebenen Austrittspegel.

Dazu ist es besonders vorteilhaft, wenn in der Rinne in Längsrichtung derselben wenigstens ein Rohr angeordnet ist, welches mit Abscheideflüssigkeit beaufschlagbar und entlang seiner Längserstreckung mit mehreren Auslassöffnungen versehen ist. So kann die Rinne über im Wesentlichen ihre gesamte Längserstreckung gleichmäßig mit Abscheideflüssigkeit beaufschlagt werden.

Es ist günstig, wenn die horizontale Lage der Rinne bezogen auf ein diese tragendes Bauteil veränderbar ist. Eine horizontale Ausrichtung der Rinne unterstützt die Ausbildung einer zusammenhängenden Schicht entlang der Rinne. Wenn die Ausrichtung der Rinne separat eingestellt werden kann, muss zur Einstellung der Lage der Rinne nicht die gesamte Abscheidevorrichtung ausgerichtet werden.

In diesem Zusammenhang ist es aus denselben Gründen vorteilhaft, wenn die horizontale Lage der der Rinne zugeordneten Ablauffläche bezogen auf ein diese tragendes Bauteil veränderbar ist.

Eine weitgehend automatisch erfolgende horizontale Ausrichtung der Rinne und/oder der Ablauffläche kann erzielt werden, wenn die Rinne und/oder ein die Ablauffläche vorgebendes Bauteil mittels eines Trägerfluids schwimmend gelagert ist.

Das Austreten der Abscheideflüssigkeit aus der Rinne kann vergleichmäßigt und die Ausbildung einer zusammenhängenden Schicht aus dieser auf der Ablauffläche kann unterstützt werden, wenn in der Rinne eine Drucklufteinrichtung vorgesehen ist, mittels welcher unterhalb des Austrittspegels Druckluft von unten auf den Abscheideflüssigkeitsspiegel geblasen werden kann, so dass im Bereich der Ablauffläche in der Abscheideflüssigkeit Wellen erzeugt werden.

Alternativ kann in Längsrichtung der Rinne in dieser ein Verteilermedium, insbesondere ein poröses Material, angeordnet sein, welches von Abscheideflüssigkeit durchströmbar ist.

Bei einer baulich verhältnismäßig einfach gehaltenen Abgabeeinrichtung ist die Rinne als Rohr mit einem nach oben weisenden, entlang dessen Längserstreckung verlaufenden Oberlaufschlitz ausgebildet, wobei.unter dem Rohr wenigstens ein weiteres Rohr angeordnet ist, so dass aus dem oberen Rohr austretende Abscheideflüssigkeit über dessen Außenmantelfläche zu der Außenmantelfläche der unteren Rohres gelangt und von dort weiter zu der Abscheidefläche fließt.

Bei dieser Ausbildung der Abgabeeinrichtung ist es günstig, wenn das untere Rohr mit Abscheideflüssigkeit beschickbar ist und einen entlang seiner Längserstreckung verlaufenden Auslaufschlitz aufweist, über welchen Abscheideflüssigkeit in Richtung auf die Abscheidefläche abgebbar ist. Ausführungsbeispiele der Erfindung werden nachfolgend anhand der Zeichnung näher erläutert. In dieser zeigen:
- Figur 1: eine Lackierkabine einer Oberflächenbehandlungsanlage mit einem ersten Ausführungsbeispiel einer Overspray-Abscheidevorrichtung in einer Vorderansicht;
- Figur 2: die Lackierkabine von Figur 1 in einer perspektivischen Ansicht;
- Figur 3: eine perspektivische Ansicht zweier Abscheideeinheiten sowie dreier Elektrodeneinrichtungen der Abscheidevorrichtung von Figur 1;
- Figur 4: die beiden Abscheideeinheiten mit Elektrodeneinrichtungen von Figur 3 im vertikalen Schnitt;
- Figur 5: eine perspektivische Ansicht zweier Abscheideeinheiten sowie dreier Elektrodeneinrichtungen jeweils gemäß einem zweiten Ausführungsbeispiel;
- Figur 6: eine perspektivische Ansicht eines zweiten Ausführungsbeispiels einer Overspray-Abscheidevorrichtung, welche mehrere Abscheideeinheiten und Elektrodeneinrichtungen nach Figur 5 umfasst;
- Figuren 7 bis 17: Ausführungsbeispiele von Abgabeeinrichtungen, mittels welcher Abscheideflächen der Abscheideeinheiten eine Abscheideflüssigkeit zugeführt werden kann.

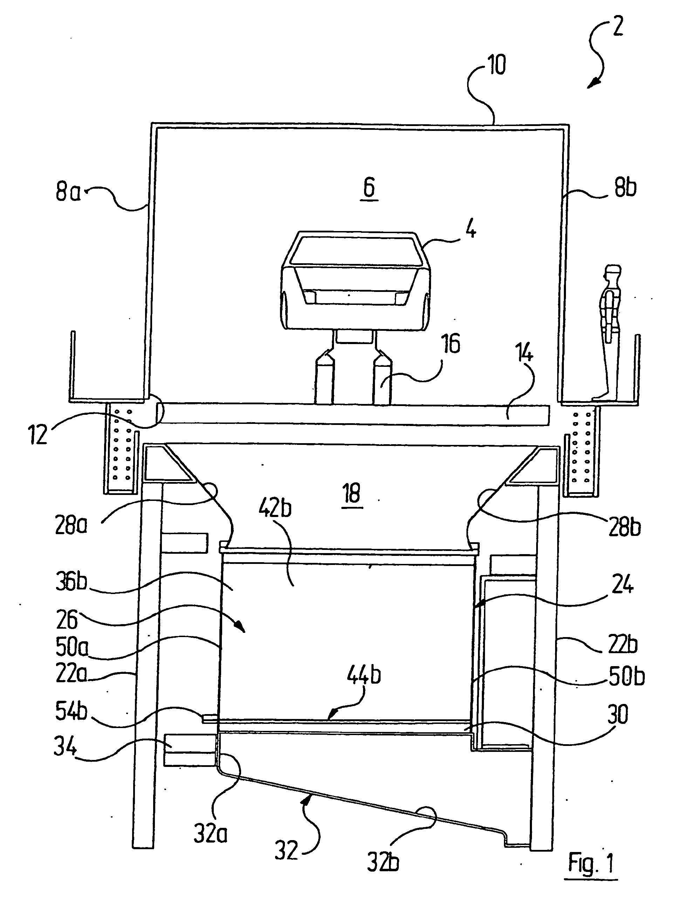

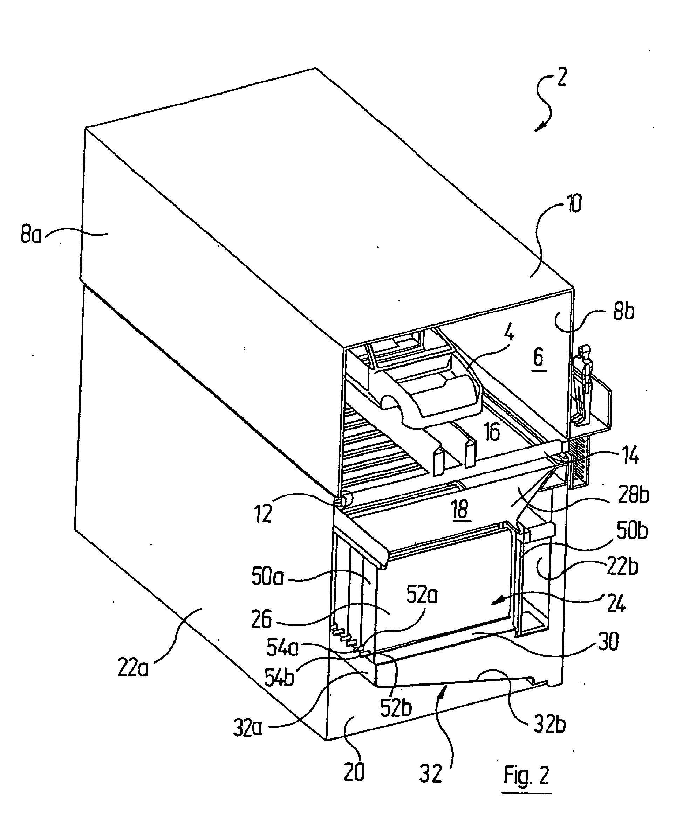

Zunächst wird auf die Figuren 1 und 2 Bezug genommen. Dort ist mit 2 insgesamt eine Lackierkabine einer Oberflächenbehandlungsanlage bezeichnet, in welcher Fahrzeugkarosserien 4 lackiert werden, nachdem sie in der Lackierkabine 2 vorgelagerten, nicht eigens gezeigten Vorbehandlungsstationen z.B. gereinigt und entfettet wurden.

Die Lackierkabine 2 umfasst einen oben angeordneten Lackiertunnel 6, welcher von vertikalen Seitenwänden 8a, 8b und einer horizontalen Kabinendecke 10 begrenzt, jedoch an den Stirnseiten und nach unten hin in der Weise offen ist, dass mit Overspray beladene Kabinenabluft nach unten strömen kann. Die Kabinendecke 10 ist in üblicher Weise als untere Begrenzung des Luftzuführraumes (nicht dargestellt) mit Filterdecke ausgebildet.

Auf Höhe der von den unteren Rändern der Seitenwände 8a, 8b flankierten unteren Öffnung 12 des Lackiertunnels 6 ist ein Stahlbau 14 angeordnet, welcher ein an und für sich bekanntes Fördersystem 16 trägt, auf welches hier nicht näher eingegangen wird. Mit diesem können zu lackierende Fahrzeugkarosserien 4 von der Eingangsseite des Lackiertunnels 6 zu dessen Ausgangsseite transportiert werden. Im Inneren des Lackiertunnels 6 befinden sich nicht eigens gezeigte Applikationseinrichtungen, mittels welcher die Fahrzeugkarosserien 4 in an und für sich bekannter Weise mit Lack beaufschlagt werden können.

Unterhalb der unteren Öffnung 12 des Lackiertunnels 6 befindet sich ein nach oben zum Lackiertunnel 6 hin offener Abscheideraum 18, in welchem beim Lackiervorgang entstehender Lack-Overspray abgeschieden wird.

Der Abscheideraum 18 ist durch eine in Figur 2 zu erkennende Bodenplatte 20, zwei vertikale Seitenwände 22a, 22b und zwei vertikale Stirnwände begrenzt, wobei die beiden letzteren in den Figuren 1 und 2 weggelassen sind. In dem Abscheideraum 18 ist eine Abscheidevorrichtung 24 mit einer Vielzahl von in Längsrichtung des Abscheideraums 18 hintereinander angeordneten Abscheideeinheiten 26 angeordnet, auf welche weiter unten noch näher eingegangen wird.

In dem Bereich des Abscheideraums 18 zwischen der Abscheidevorrichtung 24 und dem Lackiertunnel 6 befinden sich zwei Luftleitbleche 28a, 28b, welche ausgehend von den Seitenwänden 22a, 22b des Abscheideraums 18 zunächst nach unten konvergieren und in ihrem der Abscheidevorrichtung 24 zugewandten Endbereich zu den seitlichen Begrenzungen der Abscheidevorrichtung 24 divergieren. Die Luftleitbleche 28a, 28b und entsprechende, nicht dargestellte Luftleitbleche an den Stirnseiten erstrecken sich von oben bis zur Abscheidevorrichtung 24.

Die Abscheideeinheiten 26 ruhen auf einem Tragrahmen 30, welcher ein Strömen von Luft nach unten aus der Abscheidevorrichtung 24 hinaus zulässt. Unterhalb der Abscheidevorrichtung 24 befindet sich ein weiteres Luftleitblech 32, welches sich entlang der Abscheidevorrichtung 24 im Abscheideraum 18 erstreckt. Das Luftleitblech 32 weist einen vertikalen Abschnitt 32a auf, welcher der in den Figuren 1 und 2 linken Seitenwand 22a des Abscheideraums 18 zugewandt ist, und einen schräg nach unten in Richtung auf die gegenüberliegende Seitenwand 22b des Abscheideraums 18 verlaufenden Abschnitt 32b. Zwischen dem vertikalen Abschnitt 32a des Luftleitblechs 32 und der in den Figuren 1 und 2 linken Seitenwand 22a des Abscheideraums 18 ist eine nur in Figur 1 schematisch dargestellte Sammelrinne 34 angeordnet, welche sich parallel zu dem vertikalen Abschnitt 32a des Luftleitblechs 32 erstreckt und welche in Längsrichtung gegenüber einer horizontalen Ebene geneigt ist.

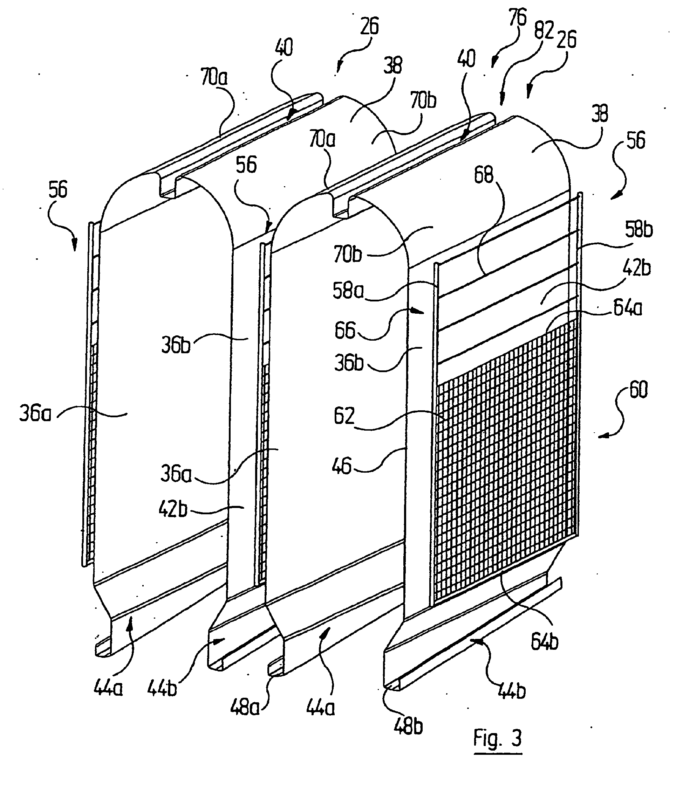

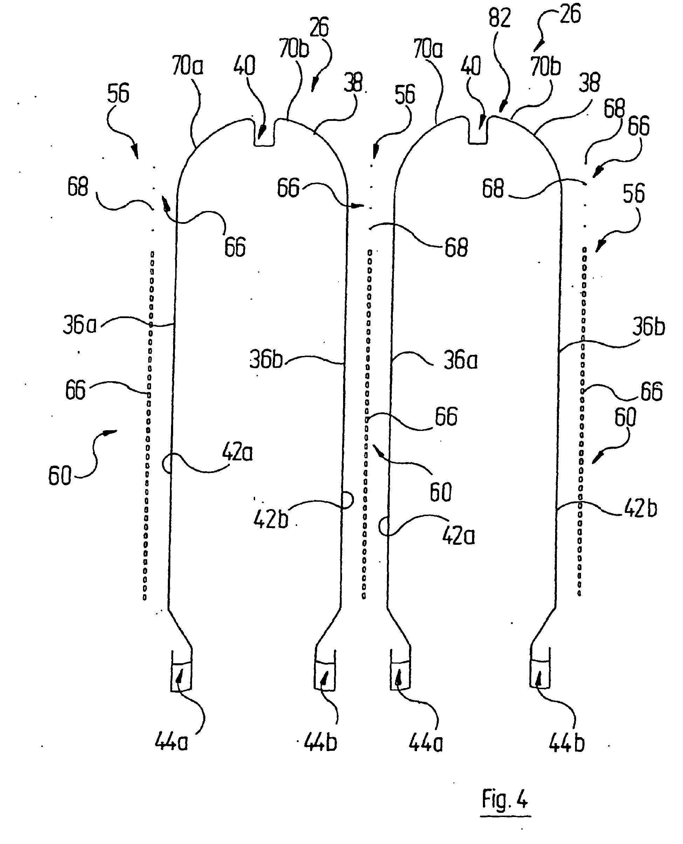

In den Figuren 3 und 4 sind zwei benachbarte Abscheideeinheiten 26 der Abscheidevorrichtung 24 gezeigt. Wie dort zu erkennen ist, umfasst eine Abscheideeinheit 26 zwei voneinander beabstandete parallele rechteckige Seitenplatten 36a, 36b, welche an ihren oberen gegenüberliegenden Stirnrändern über einen gekrümmten Abschnitt 38 miteinander verbunden sind, dessen lichte Außenkontur im Querschnitt einem Halbkreis entspricht und die Oberseite der Abscheideeinheit 26 bildet.

Am Scheitelpunkt des gekrümmten Abschnitts 38 der Abscheideeinheiten 26 ist dieser zu einer Überlaufrinne 40 ausgebildet, worauf nachstehend noch näher eingegangen wird.

Die jeweiligen Außenflächen der Seitenplatten 36a, 36b bilden Abscheideflächen 42a bzw. 42b, worauf ebenfalls weiter unten nochmals eingegangen wird.

An ihren unteren Ränder tragen die Seitenplatten 36a, 36b jeweils eine Ablaufrinne 44a, 44b, welche parallel zu den Seitenplatten 36a, 36b der Abscheideeinheiten 26 verläuft und in Richtung einer ersten, in Figur 3 vorderen Stirnseite 46 der Abscheideeinheit 26 nach unten geneigt ist. Die Ablaufrinnen 44a, 44b schließen stirnseitig mit den Seitenplatten 36a, 36b der Abscheideeinheit 26 ab (vgl. Figur 3). Die Ablaufrinnen 44a, 44b sind an ihrem Ende 48a bzw. 48b an der ersten Stirnseite 46 (vgl. Figur 3) der Abscheideeinheit 26 offen.

Wie in den Figuren 1 und 2 zu erkennen ist, umfasst jede Abscheideeinheit 26 eine erste Stirnwand 50a, welche auf deren erster Stirnseite 46 angeordnet ist. Die gegenüberliegende Stirnseite der Abscheideeinheiten 26, welche nicht eigens mit einem Bezugszeichen versehen ist, ist von einer zweiten Stirnwand 50b abgedeckt. Die Stirnwände 50a, 50b der Abscheideinheiten 26 verschließen die Stirnseiten der zugehörigen Überlaufrinne 40. Die beiden Stirnwände 50a, 50b sind aus Kunststoff gefertigt. Die erste Stirnwand 50a der Abscheideeinheit 26 umfasst zwei Durchbrüche 52a, 52b, in welche jeweils eine Ablaufrinne 44a, 44b mit ihren Enden 48a, 48b mündet. Auf der den Ablaufrinnen 44a, 44b gegenüberliegenden Seite jeder Stirnwand 50a sind an die Durchbrüche 52a, 52b Abtropfbleche 54a, 54b angesetzt. Diese sind als Profil ausgebildet, dessen Querschnitt demjenigen der Ablaufrinnen 44a, 44b entspricht.

Wenn die Abscheidevorrichtung 24 im Abscheideraum 18 der Lackierkabine 2 angeordnet ist, ragen die Abtropfbleche 54a, 54b jeder Abscheideeinheit 26 über die Sammelrinne 34.

In der Abscheidevorrichtung 24 sind jeweils zwei benachbarte Abscheideeinheiten 26 unter Einhaltung eines Abstands voneinander angeordnet. Zwischen zwei benachbarten Abscheideeinheiten 26 sowie bei den freien Seitenplatten 36a bzw. 36b der beiden äußersten Abscheideeinheiten 26 innerhalb der Abscheidevorrichtung 24 erstreckt sich jeweils eine Elektrodeneinrichtung 56, von denen jede mit einer Hochspannungsquelle verbunden ist, die in Figur 4 nicht eigens gezeigt ist. In einer Abwandlung können die Elektrodeneinrichtungen 56 auch von einer einzigen Hochspannungsquelle gespeist werden. Die Abscheideeinheiten 26 sind auf Massepotential gelegt.

Jede Elektrodeneinrichtung 56 umfasst zwei gerade, parallel zueinander verlaufende Elektrodenleisten 58a, 58b. Diese halten in einem Feldabschnitt 60 der Elektrodeneinrichtung 56 eine Gitterelektrode 62, deren zwischen den Elektrodenleisten 58a, 58b verlaufende Ränder 64a, 64b senkrecht zu diesen stehen. In einem Koronaabschnitt 66 der Elektrodeneinrichtung 56 halten die Elektrodenleisten 58a, 58b mehrere als Sprühelektrode wirkende Koronadrähte 68. Die Koronadrähte 68 verlaufen in einer durch die Elektrodenleisten 58a, 58b vorgegebenen Ebene parallel zu den Rändern 64a, 64b der Gitterelektrode 62 und sind in gleichen Abständen zueinander angeordnet.

Wie in den Figuren 3 und 4 zu erkennen ist, haben die Elektrodeneinrichtungen 56 insgesamt eine Erstreckung, welche im Wesentlichen der Erstreckung der Seitenplatten 36a, 36b der Abscheideeinheiten 26 entspricht. Die Elektrodeneinrichtungen 56 sind so angeordnet, dass der untere Rand 64b der Gitterelektrode 62 etwa auf Höhe des unteren Endes der Seitenplatten 36a bzw. 36b angeordnet ist.

Im Betrieb der Abscheidevorrichtung 24 fließt an der jeweiligen Abscheidefläche 42a, 42b der Seitenplatten 36a, 36b der Abscheideeinheiten 26 von oben nach unten eine Abscheideflüssigkeit in die Ablaufrinnen 44a, 44b, welche geeignet ist, Feststoffpartikel aus dem beim Lackiervorgang entstehenden Lack-Overspray aufzunehmen.

Dazu wird diese Abscheideflüssigkeit der Überlaufrinne 40 im gekrümmten Abschnitt 38 der Abscheideeinheiten 26 zugeführt. Von dort gelangt die Abscheideflüssigkeit über die neben der Überlaufrinne 40 verlaufenden gekrümmten Flanken 70a, 70b des gekrümmten Abschnitts 38 der Abscheideeinheit 26 jeweils als zusammenhängende Schicht zu den Seitenplatten 36a, 36b und fließt an deren Abscheideflächen 42a, 42b als weiterhin zusammenhängende Abscheideflüssigkeitsschicht herab.

Die Anzahl der Koronadrähte 68 der Elektrodeneinrichtung 56 und deren Abstand voneinander kann abhängig von dem Abscheideverhalten der Overspraypartikel variieren. Beim vorliegenden Ausführungsbeispiel sind vier Koronadrähte 68 vorgesehen, von denen der oberste neben dem gekrümmten Abschnitt 38 der Abscheideeinheit 26 angeordnet ist, wogegen der darunter liegende Koronadraht 68 sich noch im Bereich neben der jeweiligen Seitenplatte 36a bzw. 36b der Abscheideeinheit 26 befindet.

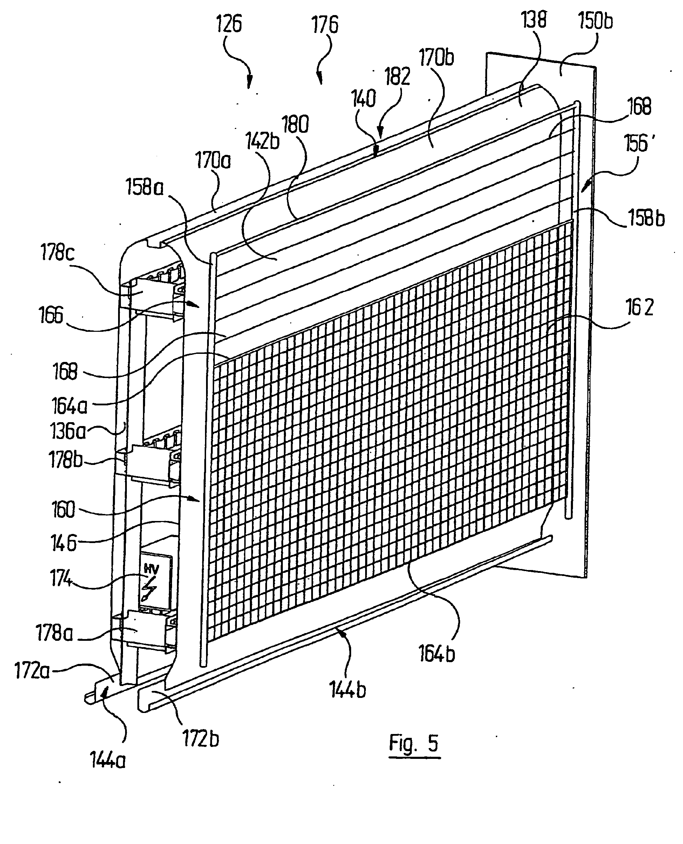

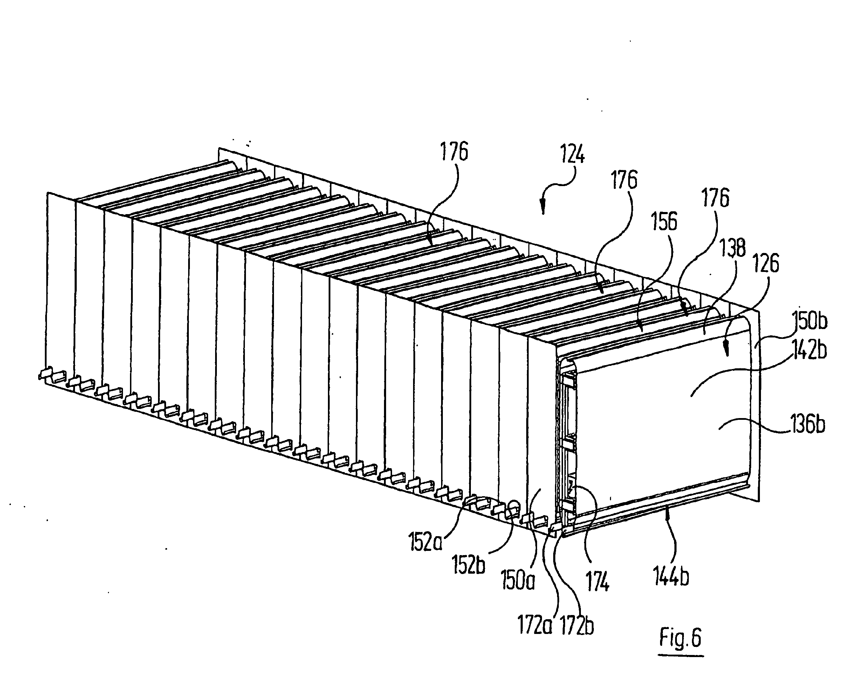

In Figur 5 sind als jeweils zweites Ausführungsbeispiel eine abgewandelte Abscheideeinheit 126 sowie eine abgewandelte Elektrodeneinrichtung 156 und in Figur 6 eine diese umfassende abgewandelte Abscheidevorrichtung 124 gezeigt. Komponenten der Abscheideeinheit 126, der Elektrodeneinrichtung 156 und der Abscheidevorrichtung 124, welche denjenigen der Abscheideeinheit 26, der Elektrodeneinrichtung 56 und der Abscheidevorrichtung 24 nach den Figuren 1 bis 4 entsprechen, sind mit denselben Bezugszeichen zuzüglich 100 gekennzeichnet.

Die Abscheideeinheit 126 unterscheidet sich von der Abscheideeinheit 26 unter anderem dadurch, dass die Ablaufrinnen 144a, 144b über die Stirnseite 146 der Abscheideeinheit 126 überstehen. Die überstehenden Abschnitte 172a, 172b entsprechen den oben erläuterten Abtropfblechen 54a, 54b, auf welche daher bei der Abscheidevorrichtung 124 verzichtet werden kann.

Wie in Figur 6 zu erkennen ist, erstrecken sich die überstehenden Abschnitte 172a, 172b der Ablaufrinnen 144a, 144b der Abscheideeinheit 126 durch die jeweiligen Durchbrüche 152a, 152b in jeder Stirnwand 150a der Abscheidevorrichtung 124 hindurch.

In Figur 5 ist eine Hochspannungsquelle 174 gezeigt, welche zwischen den Seitenplatten 136a, 136b einer jeden Abscheideeinheit 126 angeordnet ist und mit der Elektrodeneinrichtung 156 verbunden ist. In entsprechender Weise kann die Hochspannungsquelle 174 auch bei jeder Abscheideinheit 26 gemäß dem ersten Ausführungsbeispiel vorhanden sein. Jeweils eine einzelne Abscheideeinheit 126 und eine einzelne Elektrodeneinrichtung 156 bilden so ein Abscheidemodul 176. Entsprechend bilden auch jeweils eine einzelne Abscheideeinheit 26 und eine einzelne Elektrodeneinrichtung 56 nach den Figuren 1 bis 4 ein Abscheidemodul 76.

In Figur 5 sind außerdem Verstrebungen 178a, 178b, 178c zu erkennen, welche die Innenflächen der beiden Seitenplatten 136a, 136b der Abscheideeinheit 126 unten, in der Mitte und oben miteinander verbinden.

Bei der Elektrodeneinrichtung 156 gemäß dem zweiten Ausführungsbeispiel verläuft senkrecht zwischen den Elektrodenleisten 158a, 158b oberhalb des obersten Koronadrahts 168 eine Schutzstange 180, durch welche die Gefahr eines Kontakts von möglicherweise aus dem Lackiertunnel 6 auf die Elektrodeneinrichtung 156 herunterfallenden Gegenständen oder Partikeln mit den Koronadrähten 168 verringert wird.

Ansonsten gilt das oben zu der Abscheideeinheit 26, der Elektrodeneinrichtung 56 und zur Abscheidevorrichtung 24 Gesagte für die Abscheideeinheit 126, die Elektrodeneinrichtung 156 und die Abscheidevorrichtung 124 sinngemäß entsprechend.

Das Grundprinzip der oben erläuterten Vorrichtungen wird nun am Beispiel der Abscheidevorrichtung 24 nach den Figuren 1 bis 4 erläutert. Die Verwendung der Abscheidevorrichtung 124 gemäß den Figuren 5 und 6 in der Lackierkabine 2 erfolgt analog.

Beim Lackieren der Fahrzeugkarosserien im Lackiertunnel 6 wird die dort befindliche Kabinenluft mit Lack-Overspraypartikeln beladen. Diese können noch flüssig und/oder klebrig aber auch schon mehr oder weniger fest sein. Die mit Lack-Overspray beladene Kabinenabluft strömt durch die untere Öffnung 12 des Lackiertunnels 6 in den Abscheideraum 18. Dort wird diese Luft durch die Luftleitbleche 28a, 28b in Richtung auf die Abscheidevorrichtung 24 gelenkt und strömt zwischen benachbarten Abscheideeinheiten 26 hindurch in Richtung auf das untere Luftleitblech 32.

An den Koronadrähten 68 kommt es in an und für sich bekannter Weise zu Koronaentladungen, durch welche die Overspraypartikel in der vorbeiströmenden Kabinenabluft effektiv ionisiert werden.

Die ionisierten Overspraypartikel passieren die auf Massepotential liegenden Seitenplatten 36a, 36b zweier benachbarter Abscheideeinheiten 26 und die dazwischen verlaufende Gitterelektrode 62 im ersten Abschnitt 60 der Elektrodeneinrichtung 56. Auf Grund des zwischen Gitterelektrode 62 und Seitenplatten 32a, 32b ausgebildeten elektrischen Feldes scheiden sich die ionisierten Overspraypartikel an Abscheideflächen 42a, 42b der Seitenplatten 36a, 36b der Abscheideeinheiten 26 ab und werden dort von der daran entlang fließenden Abscheideflüssigkeit aufgenommen.

Ein Teil der ionisierten Overspraypartikel scheidet sich bereits im zweiten Abschnitt 66 der Elektrodeneinrichtung 56 im Bereich der Koronadrähte 68 an den Abscheideeinheiten 26 ab. Das zwischen den Koronadrähten 68 und der jeweiligen Seitenplatte 36a, 36b der Abscheideeinheit 26 vorhandene elektrische Feld ist jedoch inhomogener als das elektrische Feld im Bereich der Gitterelektrode 62, weshalb dort ein gerichteteres und effektiveres Abscheiden der ionisierten Overspraypartikel an der entsprechenden Abscheideeinheit 26 erfolgt.

Die beim Durchgang zwischen den Abscheideeinheiten 26 gereinigte Luft wird von dem unteren Luftleitblech 32 in Richtung auf die in den Figuren 1 und 2 rechts gezeigte Seitenwand 22b des Abscheideraums 18 geleitet, von wo sie, gegebenenfalls nach einer gewissen Konditionierung, dem Lackiertunnel 6 wieder als Frischluft zugeführt werden kann. Bei der Konditionierung kann es sich insbesondere um ein Nachregeln der Temperatur, der Luftfeuchte und gegebenenfalls um das Entfernen von noch in der Luft befindlichen Lösemitteln handeln.

Die an den Abscheideeinheiten 26 herabfließende und nun mit den Overspraypartikeln beladene Abscheideflüssigkeit gelangt unten in die Ablaufrinnen 44a, 44b der Abscheideeinheiten 26. Durch die Neigung der Ablaufrinnen 44a, 44b fließt die beladene Abscheideflüssigkeit in Richtung auf die Durchbrüche 52a, 52b in den jeweiligen Stirnwänden 50a, durch diese hindurch und von dort über die Abtropfbleche 54a, 54b in die Sammelrinne 34. Über die Sammelrinne 34 fließt die mit Overspraypartikeln beladene Abscheideflüssigkeit aus der Lackierkabine 2 heraus und kann einer Reinigung und Wiederaufbereitung, bei welcher die Abscheideflüssigkeit von den Overspraypartikeln befreit wird, oder einer Entsorgung zugeführt werden.

Bei den in den Figuren 1 bis 6 gezeigten Ausführungsbeispielen der Abscheideeinheiten 26, 126 bildet die jeweilige Überlaufrinne 40 bzw. 140 eine als Überlaufeinrichtung ausgebildete Abgabeeinrichtung 82 bzw. 182, mittels welcher die Abscheideflüssigkeit so zu der Abscheidefläche 42a, 42b bzw. 142a, 142b gelangt, dass die Abscheideflüssigkeit an der Abscheidefläche 42a, 42b, 142a, 142b als weitgehend zusammenhängende Schicht herab fließt. Die Abscheideflüssigkeit tritt dabei entlang der Längserstreckung der Rinne 40, 140 aus, wenn der Pegel der Abscheideflüssigkeit in der Rinne 40, 140 einen Austrittspegel überschreitet.

Die Überlaufrinne 40, 140 ist zwischen den gekrümmten Flanken 70a, 70b bzw. 170a, 170b des gekrümmten Abschnitts 38, 138 der Abscheideeinheit 26, 126 angeordnet und mit diesen so verbunden, dass die Außenfläche der Überlaufrinne 40, 140 mehr oder weniger nahtlos in die Außenfläche einer der beiden gekrümmten Flanken 70a, 70b, 170a, 170b übergeht.

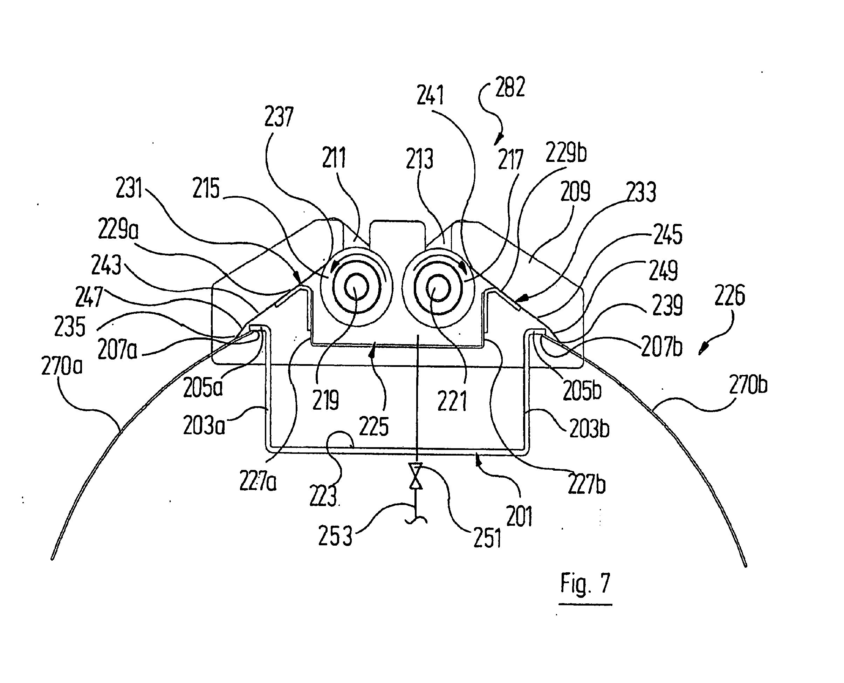

Nachfolgend werden weitere Ausführungsbeispiele der Abgabeeinrichtung anhand der Figuren 7 bis 17 erläutert. Richtungsangaben, wie horizontal, vertikal, oben oder unten beziehen sich dabei stets auf eine zum Betrieb vorbereitete Abscheideeinheit 26, 126.

In Figur 7 ist als weiteres Ausführungsbeispiel eine Abgabeeinrichtung 282 gezeigt. Bei dieser tragen Komponenten, die solchen der Abgabeeinrichtung 82 entsprechen, dieselben Bezugszeichen zuzüglich 200.

Die Abgabeeinrichtung 282 umfasst eine Tragwanne 201, welche zwischen den gekrümmten Flanken 270a, 270b der Abscheideeinheit 226 angeordnet ist und sich zwischen deren in Figur 7 nicht zu erkennenden Stirnwänden 250a, 250b erstreckt. Die Seitenwände 203a, 203b der Tragwanne 201 sind an ihrem oberen Ende nach außen zu Aufnahmeabschnitten 205a, 205b gekantet, mit welchen die Aufnahmewanne 201 auf den sich gegenüberliegenden Enden 207a, 207b der gekrümmten Flanken 270a, 270b der Abscheideeinheit 226 aufliegt.

An jeder Stirnseite der Tragwanne 201 ist eine Lagereinheit 209 angebracht, welche nach oben über die gekrümmten Flanken 270a, 270b der Abscheideeinheit 226 übersteht. Die Lagereinheiten 209, von denen in Figur 7 nur eine zu erkennen ist, nehmen erste Flanschlager 211 und zweite Flanschlager 213 auf. Die ersten Flanschlager 211 lagern eine drehbare erste Walze 215 und die zweiten Flanschlager 213 lagern eine drehbare zweite Walze 217. Die Drehachsen 219, 221 der Walzen 215, 217 verlaufen parallel zueinander in Längsrichtung der Tragwanne 201 in einer horizontalen Ebene, wobei zwischen den Außenmantelflächen der Walzen 215, 217 ein Abstand verbleibt. Die vertikale Lage der Flanschlager 211, 213 kann verändert werden, wodurch die Ausrichtung der Walzen 215 und 217 bezogen auf eine horizontale Ebene eingestellt werden kann.

Die Walzen 215, 217 können durch hier nicht eigens dargestellte Antriebsmittel derart angetrieben werden, dass sich die im Querschnitt links angeordnete Walze, in Figur 7 ist dies die Walze 215, gegen den Uhrzeigersinn und die im Querschnitt rechts angeordnete Walze, in Figur 7 ist dies die Walze 217, im Uhrzeigersinn dreht. Dies ist in Figur 7 durch entsprechende Pfeile gezeigt.

Die Walzen 215, 217 ragen mit einem unterhalb der durch ihre Drehachsen 219, 221 vorgegebenen Ebene liegenden Bereich in eine Rinne 225, welche mit der Abscheideflüssigkeit gefüllt werden kann, so dass die Walzen 215, 217 dann bereichsweise in die Abscheideflüssigkeit eintauchen. Die Rinne 225 ist über nicht eigens dargestellte Verbindungsglieder von der Tragwanne 201 gehalten. Die vertikalen Seitenwände 227a, 227b der Rinne 225 tragen außen Halterungen 229a, 229b für Federbleche 231 und 233, die als der Rinne 225 zugeordnete Ablaufflächen für die Abscheideflüssigkeit dienen.

Das von der Halterung 229a getragene erste Federblech 231 liegt mit einem Längsrand 235 auf der gekrümmten Flanke 270a der Abscheideeinheit 226 auf. Der gegenüberliegende Längsrand 237 dieses Federblechs 231 liegt dagegen auf der in Richtung auf die Seitenwand 227a der Rinne 225 weisenden Seite der Walze 215 an deren Außenmantelfläche an. In entsprechender Weise liegt das zweite Federblech 233 mit einem Längsrand 239 auf der gekrümmten Flanke 270b der Abscheideeinheit 226 auf und mit seinem gegenüberliegenden Längsrand 241 auf der in Richtung auf die Seitenwand 227b der Rinne 225 weisenden Seite der Walze 217 an deren Außenmantelfläche an. Die Federbleche 231, 233 weisen ausgehend von den Walzen 215, 217 jeweils einen planen Abschnitt 243, 245 auf, welche in einen gegenüber diesen nach unten geneigten, jedoch ebenfalls planen Abschnitt 247 bzw. 249 übergehen, die ihrerseits in den Längsrändern 235 bzw. 239 enden.

Die Federbleche 231, 233 sind von den Halterungen 229a, 229b so getragen, dass ihre plane Abschnitte 243, 245 ausgehend von den an den Walzen 215, 217 anliegenden Längsrändern 237, 241 nach unten geneigt verlaufen. Die Halterungen 229a, 229b sind verstellbar, so dass die Lage der Federbleche 231, 233 an die Lage der Walzen 215, 217 angepasst werden kann.

Im Betrieb der Abscheideeinheit 226 wird die Rinne 225 über eine mit einem Absperrventil 251 versehene Zuführleitung 253 von unten her mit der aus einem hier nicht eigens gezeigten Reservoir kommenden Abscheideflüssigkeit gefüllt, so dass die Walzen 215, 217 in die Abscheideflüssigkeit eintauchen. Die Walzen 215, 217 werden in ihre jeweilige Drehrichtung verdreht, wodurch Abscheideflüssigkeit von den Walzen 215, 217 mitgenommen wird und so nach oben aus der Rinne 225 austritt und zu den Längsrändern 237, 241 der Federbleche 231, 233 gelangt. Die Federbleche 231, 233 streifen die Abscheideflüssigkeit von den Walzen 215, 217 ab, welche als zusammenhängende Schicht über die Federbleche 231, 233 zu den gekrümmten Flanken 270a, 270b der Abscheideeinheit 226 und über diese als zusammenhängende Schicht zu den in Figur 7 nicht gezeigten Abscheideflächen 242a, 2426b der Abscheideeinheit 226 gelangt.

Im Hinblick auf die Füllhöhe der Abscheideflüssigkeit innerhalb der Rinne 225 ist lediglich darauf zu achten, dass die Walzen 215, 217 stets in die Abscheideflüssigkeit eintauchen.

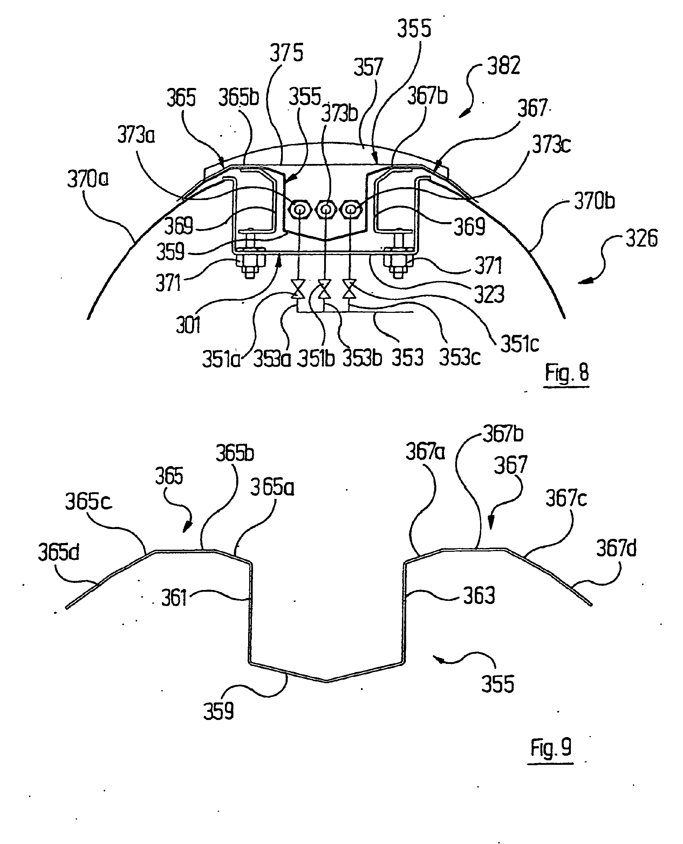

In Figur 8 ist als weiteres Ausführungsbeispiel eine als Überlaufeinrichtung ausgebildete Abgabeeinrichtung 382 gezeigt. In dieser sind Komponenten, die denjenigen der Abgabeeinrichtung 282 von Figur 7 entsprechen, mit denselben Bezugszeichen zuzüglich 100 gekennzeichnet.

Die Abgabeeinrichtung 382 umfasst eine Überlaufrinne 355, welche sich in Längsrichtung der Abscheideeinheit 326 zwischen zwei mit den Stirnseiten derselben abschließenden Stirnwänden 357 erstreckt, von denen in Figur 8 lediglich eine zu erkennen ist.

Die Überlaufrinne 355 ist in Figur 9 in gegenüber Figur 8 vergrößertem Maßstab dargestellt. Wie dort zu erkennen ist, weist sie einen V-förmigen Boden 359 und zwei vertikale Seitenwände 361, 363 auf. An ihren jeweils oberen Rändern tragen die Seitenwände 361, 363 jeweils einen Überlaufflügel 365, 367. Die beiden überlaufflügel 365, 367 erstrecken sich über die gesamte Länge der Überlaufrinne 355 und dienen als der Überlaufrinne 355 zugeordnete Ablaufflächen für die Abscheideflüssigkeit.

Ausgehend von den Seitenwänden 361, 363 weisen die Überlaufflügel 365, 367 nach oben geneigte erste Abschnitte 365a, 367a, welche jeweils jeweils in einen zweiten Abschnitt 365b, 367b übergehen. Die zweiten Abschnitte 365b, 367b liegen in einer gemeinsamen horizontalen Ebene. An die zweiten Abschnitte 365b, 367b schließen sich dritte Abschnitte 365c bzw. 367c an, die von innen nach außen betrachtet nach unten geneigt sind. Ein sich jeweils an die geneigten dritten Abschnitte 356c, 367c anschließender Endabschnitt 365d bzw. 367d ist, von innen nach außen betrachtet, nochmals stärker gegenüber den benachbarten Abschnitten 365c, 367c nach unten geneigt.

Wie in Figur 8 zu erkennen ist, liegt die Überlaufrinne 355 mit den horizontalen Abschnitten 365b, 367b ihrer Überlaufflügel 365, 367 auf Abstandsgliedern 369 auf, welche über Stellschrauben 371 mit dem Boden 323 der Aufnahmewanne 301 verbunden sind.

Bei der Abgabeeinrichtung 382 wird der Überlaufrinne 355 die Abscheideflüssigkeit über die Zuführleitung 353 zugeführt. In Richtung auf die Überlaufrinne 355 gabelt sich diese in drei Leitungen 353a, 353b, 353c, in welchen jeweils ein Absperrventil 351a, 351b, 351c angeordnet ist. Die Leitungen 353a, 353b, 353c führen jeweils zu einem Beschickungsrohr 373a, 373b, 373c. Die Beschickungsrohre 373a, 373b, 373c erstrecken sich in Längsrichtung der Überlaufrinne 355 nahe deren Boden 359 und sind entlang ihrer Längserstreckung mit in Figur 8 nicht zu erkennenden seitlichen Auslassöffnungen versehen. Der Überlaufrinne 355 wird somit die Abscheideflüssigkeit unterhalb des Austrittspegels zugeführt, bei dessen Oberschreiten die Abscheideflüssigkeit nach oben aus der Überlaufrinne 355 austritt.

In entsprechender Weise kann sich auch bei der Abgabeeinrichtung 282 nach Figur 7 die Zuführleitung 253 in drei Leitungen gabeln, in denen jeweils ein Absperrventil angeordnet ist und die jeweils zu einem Beschickungsrohr führen, welches dem Beschickungsrohr 373a, 373b oder 373c der Abgabeeinrichtung 382 entspricht. Auch den Rinnen 40, 140 der Abgabeeinrichtungen 82 und 182 (vgl. Figuren 3 und 5) kann die Abscheideflüssigkeit auf diese Weise zugeführt werden.

Über die Stellschrauben 371 in Verbindung mit den Abstandsgliedern 369, von denen entlang der Überlaufrinne 355 jeweils mehrere vorgesehen sind, kann die Position der Überlaufrinne 355, insbesondere ihre Neigung, relativ zur Aufnahmewanne 301 eingestellt werden. Dadurch ist eine Anpassung der Lage der Überlaufrinne 355 mit ihren Überlaufflügeln 365 und 367 relativ zu einer horizontalen Ebene und relativ zu der Abscheideeinheit 326 bzw. zu deren gekrümmten Flanken 370a, 370b möglich.

Bei der Abgabeeinrichtung 382 wird die Überlaufrinne 355 über die Beschickungsrohre 373 mit Abscheideflüssigkeit gespeist, wobei die Zuflussmenge derselben durch Schließen oder Freigeben der Absperrventile 351a, 351b, 351c eingestellt werden kann. Bei diesen kann es sich alternativ auch um in ihrem Durchgangsquerschnitt einstellbare Ventile handeln.

Der Überlaufrinne 355 wird Abscheideflüssigkeit derart zugeführt, dass deren Pegel innerhalb der Überlaufrinne 355 ansteigt und die Abscheideflüssigkeit nach oben austritt und über die nach oben geneigten ersten Abschnitte 365a, 367a zu den horizontalen zweiten Abschnitten 365b und 367b der Überlaufflügel 365 und 367 gelangt, wo sich jeweils eine zusammenhängende Schicht der Abscheideflüssigkeit bildet. Diese zusammenhängenden Schichten der Abscheideflüssigkeit auf beiden Überlaufflügeln 365, 367 der Überlaufrinne 355 fließen dann als weiterhin zusammenhängende Schichten über die nach unten geneigten dritten Abschnitte 365c, 365c bzw. Endabschnitte 367d, 367d der Überlaufflügel 365, 367 zu den gekrümmten Flanken 370a, 370b der Abscheideeinheit 326. Von dort fließt die Abscheideflüssigkeit, wie bereits oben erläutert, jeweils als weiterhin zusammenhängende Schicht zu den Abscheideflächen 342a, 342b der Abscheideeinheit 326. Der Flüssigkeitsspiegel der Abscheideflüssigkeit nach Überschreiten des durch die Überlaufrinne 355 vorgegebenen Austrittspegels ist in Figur 8 im Bereich der Überlaufrinne 355 mit ihren Überlaufflügeln 365, 367 durch eine Linie 375 angedeutet.

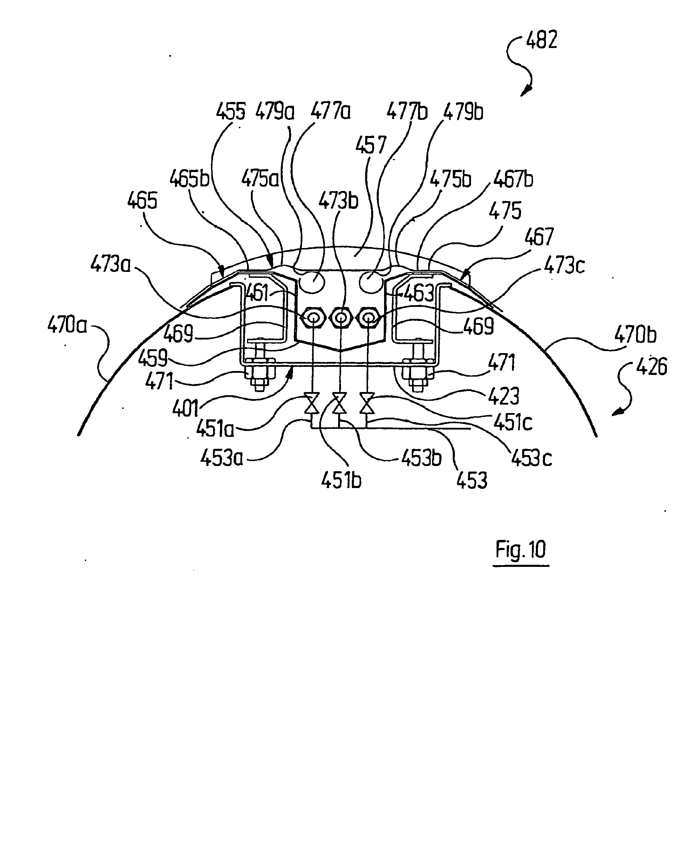

In Figur 10 ist als weiteres Ausführungsbeispiel eine als Überlaufeinrichtung ausgebildete Abgabeeinrichtung 482 gezeigt, bei welcher Komponenten, die diejenigen der Abgabeeinrichtung 382 von Figur 8 entsprechen, mit denselben Bezugszeichen zuzüglich 100 gekennzeichnet sind.

Die Abgabeeinrichtung 482 unterscheidet sich von der Abgabeeinrichtung 482 nach Figur 8 lediglich dadurch, dass auf Höhe des Übergangs der Seitenwände 461 und 463 in die Überlaufflügel 465 und 467, jedoch unterhalb des Austrittspegels der Abscheideflüssigkeit, jeweils ein aus einer nicht eigens gezeigten Druckluftquelle mit Druckluft beaufschlagbares Druckluftrohr 477a, 477b angeordnet ist. Jedes der Druckluftrohre 477a, 477b weist einen entlang ihrer Längserstreckung verlaufenden Ausblasschlitz 479a, 479b oder eine Vielzahl entlang ihrer Längserstreckung angeordneter Ausblasöffnungen auf und ist so angeordnet, dass aus dem jeweiligen Ausblasschlitz 479a, 479b ausströmende Druckluft von unten schräg in Richtung auf den Abscheideflüssigkeitsspiegel 475 geblasen werden kann. Auf diese Weise bildet sich auf dem Flüssigkeitsspiegel 475 jeweils eine über den jeweiligen Überlaufflügel 465, 467 wandernde Welle 475a, 475b. Diese begünstigt jeweils die Ausbildung einer zusammenhängenden Schicht der zu der gekrümmten Flanke 470a, 470b der Abscheideeinheit 426 strömenden Abscheideflüssigkeit.

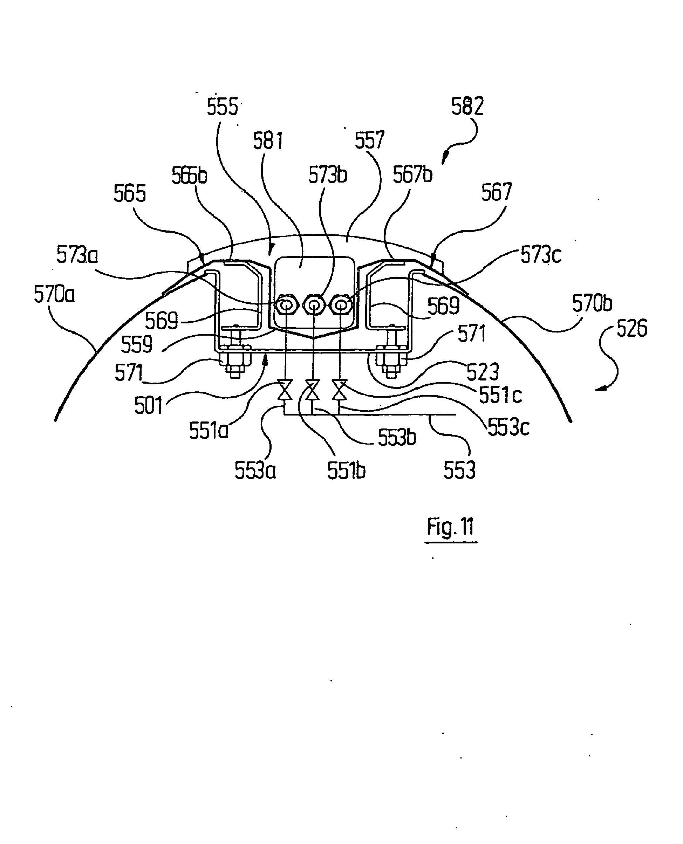

In Figur 11 ist als weiteres Ausführungsbeispiel eine als Überlaufeinrichtung ausgebildete Abgabeeinrichtung 582 gezeigt, bei welcher Komponenten, die denjenigen der Abgabeeinrichtung 382 nach Figur 8 entsprechen, mit denselben Bezugszeichen zuzüglich 200 gekennzeichnet sind.

Im Unterschied zur Abgabeeinrichtung 382 nach Figur 8 umfasst die Abgabeeinrichtung 582 ein Verteilermedium 581 in Form eines porösen Materials, welches die Beschickungsrohre 573a, 573b und 573c in der Überlaufrinne 555 umgibt und einhüllt. Als poröses Material kommt beispielsweise ein Schaumstoff in Betracht.

Durch das Verteilermedium 581 wird das Austreten der Abscheideflüssigkeit aus der Überlaufrinne 555 vergleichmäßigt, wodurch zuverlässig eine zusammenhängende Schicht der Abscheideflüssigkeit zu beiden Seiten der Überlaüfrinne 555 auf deren Überlaufflügeln 565, 567 erzeugt wird.

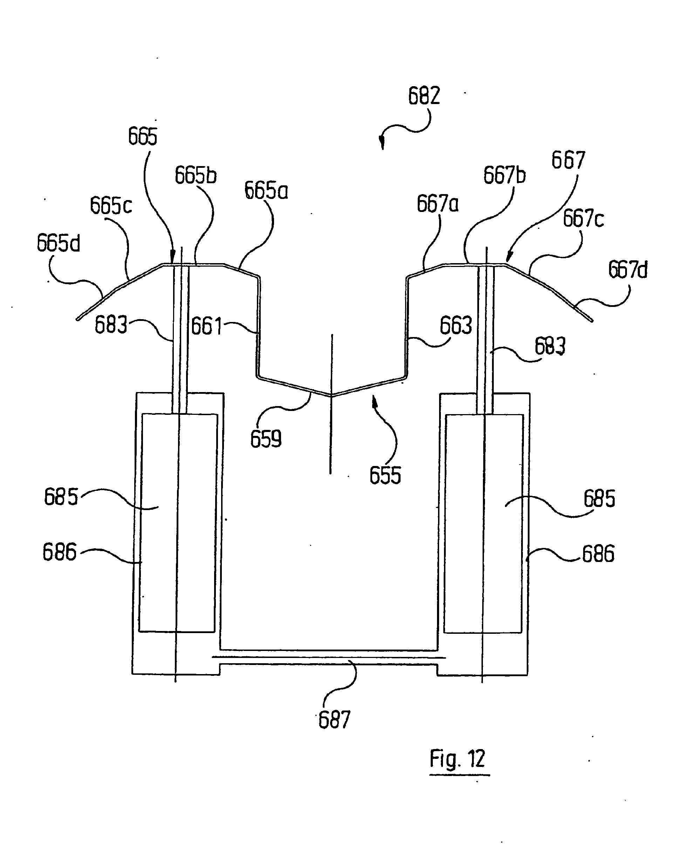

In Figur 12 ist als weiteres Ausführungsbeispiel eine als Überlaufeinrichtung ausgebildete Abgabeeinrichtung 682 gezeigt, bei welcher Komponenten, die denjenigen der Abgabeeinrichtung 382 nach Figur 8 entsprechen, mit denselben Bezugszeichen zuzüglich 300 gekennzeichnet sind.

Während bei der Abgabeeinrichtung 382 nach Figur 8 zur Nivellierung der Überlaufrinne 355 die mit den Abstandsgliedern 369 zusammenarbeitenden Stellschrauben 371 vorgesehen sind, ist die Überlaufrinne 655 der Abgabeeinrichtung 682 über ihre Überlaufflügel 665 und 667 durch vier Tragstege 683 auf vier Schwimmkörpern 685 gelagert, von denen in Figur 12 jeweils lediglich zwei zu erkennen sind. Die Schwimmkörper 685 ihrerseits sind in jeweils in einem mit einem Tragfluid, insbesondere Wasser, gefüllten Tank 686 angeordnet, so dass die Schwimmkörper 685 in vertikaler Richtung bewegbar sind. Die Tanks 686 sind in Bodennähe fluidisch miteinander verbunden, so dass zwischen den Tanks 686 ein Austausch des Tragfluids erfolgen kann. In Figur 12 ist lediglich eine Verbindungsleitung 687 zwischen den beiden dort zu erkennenden Tanks 686 gezeigt.

Durch die so freischwimmend gelagerte Überlaufrinne 655 erfolgt eine automatische Nivellierung der Überlaufrinne 655 gegenüber einer horizontalen Ebene ohne Abhängigkeit von der Ausrichtung und Lage der zugehörigen Abscheideeinheit 626.

Die Abgabeeinrichtung 682 kann, abgesehen von der oben erläuterten schwimmenden Lagerung der Überlaufrinne 655, den Abgabeeinrichtungen 382, 482 oder 582 nach den Figuren 8, 10 und 11 entsprechen.

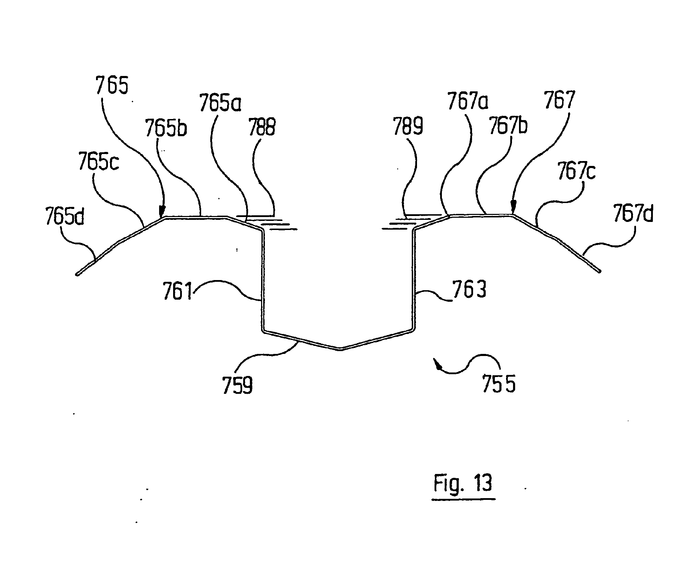

In Figur 13 ist eine abgewandelte Überlaufrinne 755 einer als Überlaufeinrichtung ausgebildeten Abgabeeinrichtung 782 gezeigt, welche abgesehen von der Überlaufrinne 755 den oben beschriebenen Abgabeeinrichtungen 382, 482, 582 und 682 entsprechen kann. Im Unterschied zu den Überlaufrinnen 355, 455, 555 und 655 umfasst die Überlaufrinne 755 zwei Bürsten 788 und 789, die jeweils entlang des nach oben geneigten ersten Abschnitts 765a bzw. 767a der Überlaufflügel 765 und 767 verlaufen. Die Borsten der Bürsten 788 und 789 liegen sich gegenüber.

Durch die Bürsten 788 und 789 wird eine Vergleichmäßigung des Austritts von Abscheideflüssigkeit nach oben aus der Überlaufrinne 755 erreicht, so dass sich im Bereich der Überlaufflügel 765, 767 zuverlässig eine zusammenhängende Schicht der Abscheideflüssigkeit bildet.

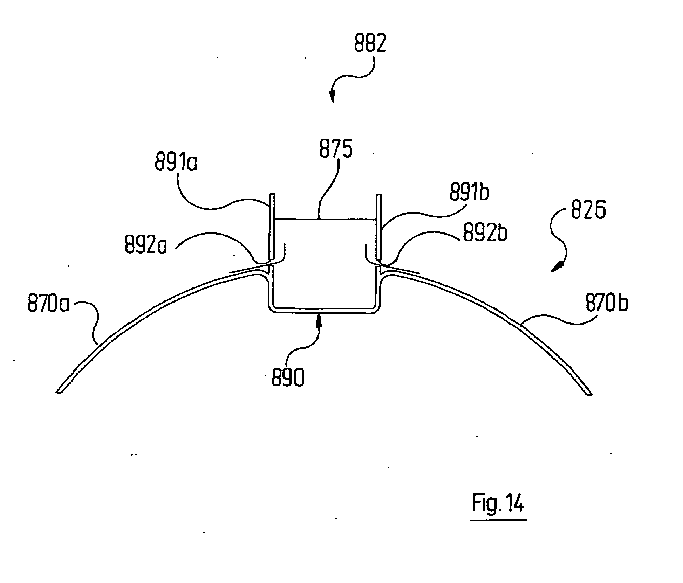

Bei dem in Figur 14 gezeigten Ausführungsbeispiel einer Abgabeeinrichtung 882 sind Komponenten, die im Zusammenhang mit der Abscheideeinheit 26 erläutert wurden, mit denselben Bezugszeichen zuzüglich 800 gekennzeichnet.

Bei der Abgabeeinrichtung 882 ist am Scheitelpunkt des gekrümmten Abschnitts 838 der Abscheideeinheit 826 eine Rinne 890 ausgebildet. Oberhalb der Ränder der Rinne 890 sind vertikale Wände 891a, 891b so angeordnet, dass dazwischen jeweils ein in Längsrichtung der Abscheideeinheit 826 verlaufender Schlitz 892a, 892b verbleibt. Die vertikalen Wände 891a, 891b sind von den Stirnwänden 850a, 850b der Abscheideeinheit 826 gehalten, die in Figur 14 nicht eigens gezeigt sind.

Die Beschickung der Rinne 890 erfolgt in der Weise, wie oben zu den Abgabeeinrichtungen 282 bis 782 erläutert. Erreicht der Pegel der Abscheideflüssigkeit in der Rinne 890 die Schlitze 892a, 892b, so tritt Abscheideflüssigkeit aus der Rinne 890 in Richtung auf die gekrümmten Flanken 870a, 870b der Abscheideeinheit 826 aus.

Der Rinne 890 kann kurzzeitig mehr Abscheideflüssigkeit zugeführt werden, als durch die Schlitze 892a, 892b abfließen kann. In diesem Fall steigt der Pegel der Abscheideflüssigkeit an und liegt im Bereich der Seitenwände 891a, 891b. Über die Pegelhöhe, mit welcher der Flüssigkeitsspiegel der Abscheideflüssigkeit oberhalb der Schlitze 892a, 892b liegt, kann die Menge pro Zeiteinheit, mit welcher die Abscheideflüssigkeit über die Schlitze 892a, 892b aus der Abgabewanne 890 abgegeben wird und zu den gekrümmten Flanken 870a, 870b der Abscheideeinheit 826 gelangt, eingestellt werden. Die gekrümmten Flanken 870a, 870b der Abscheideeinheit 826 bilden in diesem Fall der Rinne 890 zugeordnete Ablaufflächen.

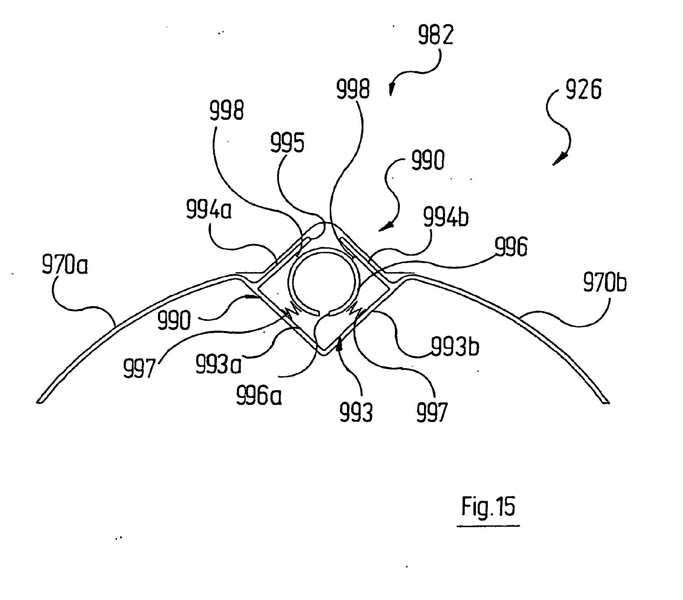

In Figur 15 ist als weiteres Ausführungsbeispiel eine als Überlaufeinrichtung ausgebildete Abgabeeinrichtung 982 gezeigt, bei welcher Komponenten, die denjenigen der Abgabeeinrichtung 882 nach Figur 14 entsprechen mit denselben Bezugszeichen zuzüglich 100 gekennzeichnet sind.

Die Überlaufrinne 990 weist bei der Abgabeeinrichtung 982 einen V-förmigen Boden 993 mit zwei im rechten Winkel zueinander stehenden Bodenabschnitten 993a, 993b, welche sich ausgehend von den gekrümmten Flanken 970a, 970b der Abscheideeinheit 926 nach unten erstrecken. Benachbart zu den jeweiligen gekrümmten Flanken 970a, 970b trägt jeder Abschnitt 993a, 993b der Überlaufrinne 990 eine obere Begrenzungswand 994a, 994b, wobei die Begrenzungswand 924a parallel zum Abschnitt 993b und die Begrenzungswand 994b parallel zum Abschnitt 993a des Bodens 993 der Überlaufrinne 990 verläuft.

Gegenüber des Scheitels des V-förmigen Bodens 993 der Oberlaufrinne 990 verbleibt zwischen den freien Rändern der oberen Begrenzungswände 994a, 994b ein Abstand, wodurch ein sich längs der Überlaufrinne 990 erstreckender Auslaufschlitz 995 gebildet ist, durch welchen Abscheideflüssigkeit aus der Überlaufrinne 990 nach oben austreten kann.

Im Inneren der Überlaufrinne 990 verläuft ein in Längsrichtung geschlitztes Rohr 996, welches über die hier nicht eigens gezeigte Zuführleitung 953 mit Abscheideflüssigkeit gespeist werden kann. Das Rohr 996 ist über mehrere Federn 997 auf der Innenfläche der Abschnitte 993a, 993b des Bodens 993 der Überlaufrinne 990 gelagert, wodurch das Rohr 996 nach oben gedrückt wird. Auf der Innenfläche der oberen Begrenzungswände 994a, 994b der Überlaufrinne 990 sind in regelmäßigen Abständen Distanzstücke 998 angeordnet, gegen welche das Rohr 996 auf Grund der Federbeaufschlagung anliegt. Das geschlitzte Rohr 996 ist so angeordnet, dass sein Schlitz 996a vertikal nach unten weist.

Die in das geschlitzte Rohr 996 geleitete Abscheideflüssigkeit verlässt dieses durch dessen Schlitz 996a, tritt in die Überlaufrinne 990 ein und steigt darin nach oben. Auf Grund der durch den Abstand zwischen dem geschlitzten Rohr 996 und den oberen Begrenzungswänden 994a, 994b der Überlaufrinne 990 vorgegebenen Engstelle kommt es dort zu einer Beschleunigung der Abscheideflüssigkeit, wodurch sich Verwirbelungen und Turbulenzen in der Abscheideflüssigkeit bilden. Diese wiederum vergleichmäßigen das Auslaufen der Abscheideflüssigkeit über den Abgabeschlitz 995, wodurch die Abscheideflüssigkeit als zusammenhängende Schicht über die Außenflächen der oberen Begrenzungswände 994a, 994b der Oberlaufrinne 990, welche dieser zugeordnete Ablaufflächen bilden, zu den gekrümmten Flanken 970a, 970b der Abscheideeinheit 926 gelangt.

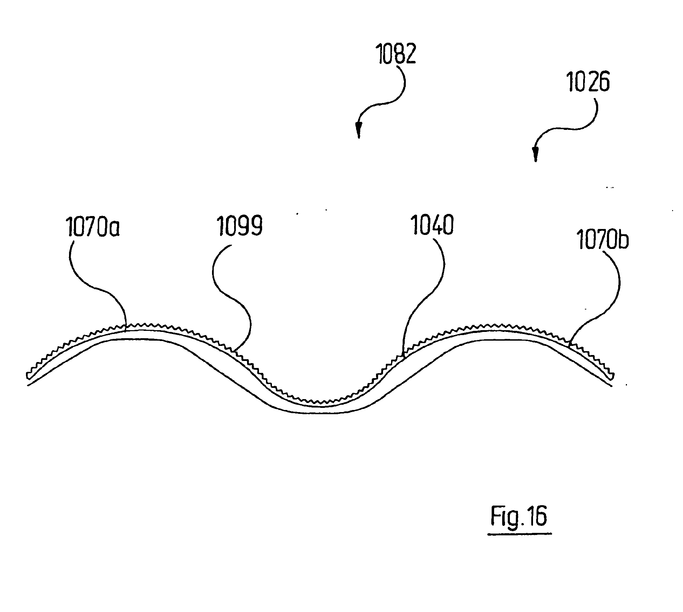

In Figur 16 ist als weiteres Ausführungsbeispiel eine als Überlaufeinrichtung ausgebildete Abgabeeinrichtung 1082 gezeigt. Diese umfasst eine Überlaufrinne 1040, die den Oberlaufrinnen 40 und 140, wie sie in Zusammenhang mit den Figuren 1 bis 6 beschrieben wurden, entspricht und welche in der dort beschriebenen Art und Weise mit Abscheideflüssigkeit beschickt werden kann.

Bei der Abgabeeinrichtung 1082 sind die mit der Abscheideflüssigkeit in Kontakt kommenden Flächen der Überlaufrinne 1040 und der als der Überlaufrinne 1040 zugeordnete Ablauffläche dienenden gekrümmten Flanken 1070a und 1070b der Abscheideeinheit 1026 mit einer Rillenstruktur 1099 versehen, deren Rillen sich in Längsrichtung der Abscheideeinheit 1026 erstrecken.

Die Rillenstruktur 1099 kann beispielsweise durch ein mit Rillen versehenes und der Außenkontur der Überlaufrinne 1040 und der gekrümmten Flanken 1070a und 1070b der Abscheideeinheit 1026 angepasstes Blech oder eine mit Rillen versehene flexible Kunststoff- oder Gummimatte, die in die Überlaufrinne 1040 eingesetzt wird und auf den gekrümmten Flanken 1070a und 1070b der Abscheideeinheit 1026 aufliegt, ausgebildet sein.

Die Überlaufmenge der Abscheideflüssigkeit über die Rillenstruktur 1099 beträgt beispielsweise 250 ml pro laufendem Meter der Überlaufrinne 1040 pro Minute. Bei dieser Überlaufmenge bildet sich auf dieser zuverlässig eine zusammenhängende Schicht der Abscheideflüssigkeit.

Durch diese Rillenstruktur 1099 wird die Abscheideflüssigkeit gleichmäßig so auf den fraglichen Flächen verteilt, dass gewährleistet ist, dass die Abscheideflüssigkeit die Abscheideflächen 1042a, 10426b der Abscheideeinheit 1026 als zusammenhängende Schicht erreicht.

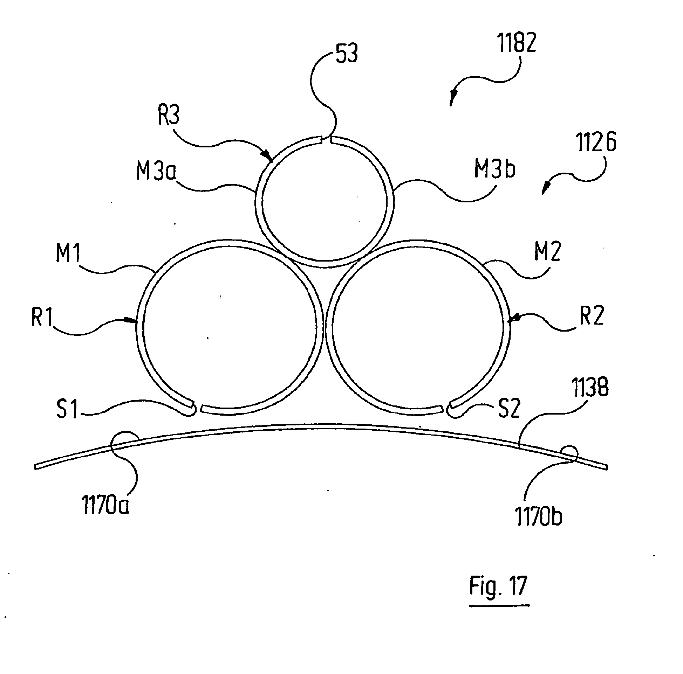

In Figur 17 ist als weiteres Ausführungsbeispiel eine als Überlaufeinrichtung ausgebildete Abgabeeinrichtung 1182 gezeigt, die mit einer Abscheideeinheit 1126 zusammenarbeiten kann, bei welcher der gekrümmte Abschnitt 1138 die beiden Abscheideflächen 1142a, 1142b bzw. die Seitenplatten 1136a, 1136b der Abscheideeinheit 1126 nahtlos ohne Ausbildung einer Rinne miteinander verbindet. Die Abgabeeinrichtung 1182 umfasst drei sich in Längsrichtung der Abscheideeinheit 1126 erstreckende Rohre R1, R2, R3, und zwar zwei untere Rohre R1, R2 und ein oberes Rohr R3, welche jeweils in Längsrichtung einen Längsschlitz S1, S2, S3 aufweisen. Anstelle der Schlitze S1, S2, S3 können auch jeweils entlang der Längserstreckung des Rohres R1, R2, R3 mehrere Auslassöffnungen vorhanden sein. Die Längsachsen der unteren Rohre R1 und R2 liegen in einer gemeinsamen horizontalen Ebene, wogegen das obere Rohr R3 von den beiden Außenmantelflächen der Rohre R1 und R2 getragen wird und achsparallel zu diesen verläuft. Somit bilden die Achsen der drei Rohre R1, R2 und R3 im Querschnitt betrachtet ein Dreieck.

Die Rohre R1, R2 und R3 werden in oben beschriebener Weise mit Abscheideflüssigkeit beschickt. Die Schlitze S1 und S2 der beiden unteren Rohre R1 und R2 sind so angeordnet, dass Abscheideflüssigkeit jeweils zur Seite und nach unten aus dem entsprechenden Rohr R1 bzw. R2 austreten und über die gekrümmte Flanke 1170a bzw. 1170b zu den Seitenplatten 1126a, 1126b der Abscheideeinheit 1126 gelangen kann. Der Schlitz S3 des oberen Rohres R3 weist nach oben, so dass das Rohr R3 eine Überlaufrinne bildet und nach oben aus dem Rohr R3 austretende Abscheideflüssigkeit über dessen Außenmantelflächen M3a und M3b zu beiden Seiten des Schlitzes S3 jeweils zu dem ersten Rohr R1 und dem zweiten Rohr R2 gelangt, über deren Außenmantelfläche M1 bzw. M2 auf die gekrümmten Flanken 1170a, 1170b der Abscheideeinheit 1126 fließt und sich dort jeweils mit aus dem Rohr R1 bzw. dem Rohr R2 fließender Abscheideflüssigkeit vereinigt. Eine zusammenhängende Schicht aus der Abscheideflüssigkeit fließt dann zu den Abscheideflächen 1142a, 1142b der Abscheideeinheit 1126. Die von der Abscheideflüssigkeit überströmten Bereiche der Außenmantelflächen M1, M2 und M3a, M3b der Rohre R1, R2 und R3 bilden hier dem Rohr 3, welches die Überlaufrinne bildet, zugeordnete Ablaufflächen.

Wie in Figur 17 zu erkennen ist, hat das obere Rohr R3 einen geringeren Innendurchmesser als die beiden unteren Rohre R1 und R2. Die Lage der Rohre R1, R2 und R3 gegenüber einer horizontalen Ebene ist einstellbar. Hierzu sind die Rohre R1, R2, R3 beispielsweise an ihren Enden so gelagert, dass die vertikale Position der Enden verändert werden kann.

## Patentansprüche

1. Vorrichtung zum Abscheiden von Lack-Overspray aus der mit Overspray beladenen Kabinenabluft von Lackieranlagen mit
a) mindestens einer Abscheidefläche (42a, 42b; 142a, 142b), an welcher die Kabinenabluft entlang führbar ist und welche mit einem Pol einer Hochspannungsquelle (74; 174) verbunden ist;
b) einer im Luftstrom angeordneten Elektrodeneinrichtung (56; 156), welche der Abscheidefläche (42a, 42b; 142a, 142b) zugeordnet und mit dem anderen Pol der Hochspannungsquelle (74; 174) verbunden ist;
c) Mitteln, mit welchen der abgeschiedene Lack-Overspray von der Abscheidefläche (42a, 42b; 142a, 142b) abtransportiert wird,
**dadurch gekennzeichnet, dass**
d) die Mittel zum Abtransport des Lack-Oversprays von der Abscheidefläche (42a, 42b; 142a, 142b) eine Abscheideflüssigkeit umfassen, welche von oben nach unten über die Abscheidefläche (42a, 42b; 142a, 142b) fließt;
e) eine Abgabeeinrichtung (82; 182; 282; 382; 482; 582; 682; 782; 882; 982; 1082; 1182) mit einer nach oben offenen Rinne (40; 140; 225; 355; 455; 555; 655; 755; 890; 990; 1040; R3) vorhanden ist, aus welcher dieser zugeführte Abscheideflüssigkeit entlang deren Längserstreckung austritt, wenn der Pegel der Abscheideflüssigkeit in der Rinne einen Austrittspegel überschreitet, und so zu der Abscheidefläche (42a, 42b; 142a, 142b) gelangt, dass die Abscheideflüssigkeit an der Abscheidefläche (42a, 42b; 142a, 142b) als weitgehend zusammenhängende Schicht herab fließt.

2. Vorrichtung nach Anspruch 1, **dadurch gekennzeichnet, dass** die Abgabeeinrichtung (82; 182; 282; 382; 482; 582; 682; 782; 882; 982; 1082; 1182) eine der Rinne (40; 140; 225; 355; 455; 555; 655; 755; 890; 990; 1040; R3) zugeordnete und parallel zu dieser verlaufende Ablauffläche (70a, 70b; 170a, 170b; 231, 233; 365, 367; 465, 467; 565, 567; 665, 667; 765, 767; 870a, 870b; 994a, 994b; 1070a, 1070b; M1, M2, M3a, M3b) umfasst, über welche die aus der Rinne (40; 140; 225; 355; 455; 555; 655; 755; 890; 990; 1040; R3) austretende Abscheideflüssigkeit seitlich in Richtung auf die Abscheidefläche (42a, 42b; 142a, 142b) abfließt.

3. Vorrichtung nach Anspruch 2, **dadurch gekennzeichnet, dass** die Ablauffläche (365, 367; 465, 467; 565, 567; 665, 667; 765, 767) entlang der Rinne (355; 455; 555; 655; 755) in deren Rand übergeht.

4. Vorrichtung nach Anspruch 2 oder 3, **dadurch gekennzeichnet, dass** die Ablauffläche (365, 367; 465, 467; 565, 567; 665, 667; 765, 767) einen ersten Abschnitt (365a, 367a; 465a, 467a; 565a, 567a; 665a, 667a; 765a, 767a) aufweist, welcher nach außen und oben geneigt ist und in einen zweiten Abschnitt (365b, 367b; 465b, 467b; 565b, 567b; 665b, 667b; 765b, 767b) übergeht, der in einer horizontalen Ebene verläuft.

5. Vorrichtung nach einem der Ansprüche 2 bis 4, **dadurch gekennzeichnet, dass** die Ablaufläche (765, 767) ein Bürstenelement (788, 789) trägt.

6. Vorrichtung nach einem der Ansprüche 1 bis 4, **dadurch gekennzeichnet, dass** oberhalb der Ränder der Rinne (890) im Wesentlichen vertikale Wände (891a, 891b) so angeordnet sind, dass dazwischen jeweils ein in Längsrichtung der Rinne (890) verlaufender Schlitz (892a, 892b) verbleibt.

7. Vorrichtung nach einem der Ansprüche 1 bis 4, **dadurch gekennzeichnet, dass** die Rinne (990) sich nach oben zu einem Auslaufschlitz (995) verjüngt, wobei im Strömungsweg der Abscheideflüssigkeit zum Auslaufschlitz (995) eine Engstelle vorgesehen ist, so dass die Abscheideflüssigkeit dort beschleunigt und verwirbelt wird.

8. Vorrichtung nach einem der Ansprüche 1 bis 4, **dadurch gekennzeichnet, dass** die Rinne (1040) und/oder die zugeordnete Ablauffläche (1070a, 1070b) mit einer Rillenstruktur (1099), vorzugsweise aus einem Kunststoff- oder Gummimaterial, versehen ist, deren Rillen sich in Längsrichtung der Rinne (1040) erstrecken.

9. Vorrichtung nach Anspruch 2, **dadurch gekennzeichnet, dass** die Abgabeeinrichtung (282) wenigstens eine in die Rinne (225) hineinragende Walze (215, 217) umfasst, die um eine parallel zur Längsrichtung der Rinne (225) verlaufende Drehachse (219, 221) verdrehbar ist, so dass in der Rinne (225) befindliche Abscheideflüssigkeit von der sich drehenden Walze (215, 217) nach oben mitgeführt wird, wobei die Ablauffläche (231, 233) die Oberfläche eines Abstreifelements (231, 233), insbesondere eines Federblechs (231, 233), ist, welches in Längsrichtung der Walze (215, 217) so an deren Außenmantelfläche anliegt, dass von der Walze (215, 217) mitgeführte Abscheideflüssigkeit abgestreift wird und über die Oberfläche des Abstreifelements (231, 233) in Richtung auf die Abscheidefläche (42a, 42b; 142a, 142b) abfließt.

10. Vorrichtung nach einem der Ansprüche 1 bis 9, **dadurch gekennzeichnet, dass** die Abscheideflüssigkeit der Rinne (40; 140; 225; 355; 455; 555; 655; 755; 890; 990; 1040; R3) unterhalb des Austrittspegels zugeführt wird.

11. Vorrichtung nach Anspruch 10, **dadurch gekennzeichnet, dass** in der Rinne (40; 140; 225; 355; 455; 555; 655; 755; 890; 1040) in Längsrichtung derselben wenigstens ein Rohr (373a, 373b, 373c; 473a, 473b, 473c; 573a, 573b, 573c) angeordnet ist, welches mit Abscheideflüssigkeit beaufschlagbar und entlang seiner Längserstreckung mit mehreren Auslassöffnungen versehen ist.

12. Vorrichtung nach einem der Ansprüche 1 bis 11, **dadurch gekennzeichnet, dass** die horizontale Lage der Rinne (355; 455; 555; 655; 755; R3) bezogen auf ein diese tragendes Bauteil (301; 401; 501; 686; 701) veränderbar ist.

13. Vorrichtung nach einem der Ansprüche 2 bis 12 unter Rückbezug auf Anspruch 2, **dadurch gekennzeichnet, dass** die horizontale Lage der der Rinne (225; 355; 455; 555; 655; 755; R3) zugeordneten Ablauffläche (231, 233; 365, 367; 465, 467; 565, 567; 665, 667; 765, 767; M1, M2, M3a, M3b) bezogen auf ein diese tragendes Bauteil (201, 225; 301; 401; 501; 686; 701) veränderbar ist.

14. Vorrichtung nach Anspruch 12 oder 13, **dadurch gekennzeichnet, dass** die Rinne (655) und/oder ein die Ablauffläche (665, 667) vorgebendes Bauteil (665, 667) mittels eines Trägerfluids schwimmend gelagert ist.

15. Vorrichtung nach einem der Ansprüche 2 bis 14 unter Rückbezug auf Anspruch 2, **dadurch gekennzeichnet, dass** in der Rinne (455) eine Drucklufteinrichtung (479a, 479b) vorgesehen ist, mittels welcher unterhalb des Austrittspegels Druckluft von unten auf den Abscheideflüssigkeitsspiegel geblasen werden kann, so dass im Bereich der Ablauffläche (465, 467) in der Abscheideflüssigkeit Wellen erzeugt werden.

16. Vorrichtung nach einem der Ansprüche 1 bis 15, **dadurch gekennzeichnet, dass** in Längsrichtung der Rinne (555) in dieser ein Verteilermedium (581), insbesondere ein poröses Material, angeordnet ist, welches von Abscheideflüssigkeit durchströmbar ist.

17. Vorrichtung nach Anspruch 1 oder 2, **dadurch gekennzeichnet, dass** die Rinne (R3) als Rohr (R3) mit einem nach oben weisenden, entlang dessen Längserstreckung verlaufenden Überlaufschlitz (S3) ausgebildet ist, wobei unter dem Rohr (R3) wenigstens ein weiteres Rohr (R1, R2) angeordnet ist, so dass aus dem oberen Rohr (R3) austretende Abscheideflüssigkeit über dessen Außenmantelfläche (M3a, M3b) zu der Außenmantelfläche (M1, M2) der unteren Rohres (R1, R2) gelangt und von dort weiter zu der Abscheidefläche (42a, 42b; 142a, 142b) fließt.

18. Vorrichtung nach Anspruch 17, **dadurch gekennzeichnet, dass** das untere Rohr (R1, R2) mit Abscheideflüssigkeit beschickbar ist und einen entlang seiner Längserstreckung verlaufenden Auslaufschlitz (S1, S2) aufweist, über welchen Abscheideflüssigkeit in Richtung auf die Abscheidefläche (42a, 42b; 142a, 142b) abgebbar ist.

## Claims

1. A device for separating paint overspray from the booth exhaust air, laden with overspray, of painting plants, having
a) at least one separating surface (42a, 42b; 142a, 142b) along which the booth exhaust air can be guided and which is connected to a pole of a high-voltage source (74; 174);
b) an electrode means (56; 156) which is arranged in the air stream and is associated with the separating surface (42a, 42b; 142a, 142b) and is connected to the other pole of the high-voltage source (74; 174);
c) means by which the paint overspray that is separated is transported away from the separating surface (42a, 42b; 142a, 142b),
**characterised in that**
d) the means for transporting away the paint overspray from the separating surface (42a, 42b; 142a, 142b) include a separating liquid which flows downwards over the separating surface (42a, 42b; 142a, 142b);
e) a discharge means (82; 182; 282; 382; 482; 582; 682; 782; 882; 982; 1082; 1182) with an upwardly open channel (40; 140; 225; 355; 455; 555; 655; 755; 890; 990; 1040; R3) is provided, out of which separating liquid supplied thereto flows along the longitudinal extent thereof when the level of separating liquid in the channel exceeds an outflow level and reaches the separating surface (42a, 42b; 142a, 142b) in such a manner that the separating liquid on the separating surface (42a, 42b; 142a, 142b) flows down as a largely cohesive film.

2. A device according to Claim 1, **characterised in that** the discharge means (82; 182; 282; 382; 482; 582; 682; 782; 882; 982; 1082; 1182) includes a drainage surface (70a, 70b; 170a, 170b; 231, 233; 365, 367; 465, 467; 565, 567; 665, 667; 765, 767; 870a, 870b; 994a, 994b; 1070a, 1070b; M1, M2, M3a, M3b) which is associated with the channel (40; 140; 225; 355; 455; 555; 655; 755; 890; 990; 1040; R3) and runs parallel thereto and over which the separating liquid flowing out of the channel (40; 140; 225; 355; 455; 555; 655; 755; 890; 990; 1040; R3) flows away laterally in direction of the separating surface (42a, 42b; 142a, 142b).

3. A device according to Claim 2, **characterised in that** the drainage surface (365, 367; 465, 467; 565, 567; 665, 667; 765, 767) merges along the channel (355; 455; 555; 655; 755) into the edge thereof.

4. A device according to Claim 2 or 3, **characterised in that** the drainage surface (365, 367; 465, 467; 565, 567; 665, 667; 765, 767) has a first section (365a, 367a; 465a, 467a; 565a, 567a; 665a, 667a; 765a, 767a) which is inclined outwards and upwards and merges into a second section (365b, 367b; 465b, 467b; 565b, 567b; 665b, 667b; 765b, 767b) which runs in a horizontal plane.

5. A device according to one of the Claims 2 to 4, **characterised in that** the drainage surface (765, 767) carries a brush element (788, 789).

6. A device according to one of the Claims 1 to 4, **characterised in that** above the edges of the channel (890) substantially vertical walls (891a, 891b) are arranged such that a slot (892a, 892b) running in the longitudinal direction of the channel (890) is in each case left between them.

7. A device according to one of the Claims 1 to 4, **characterised in that** the channel (990) tapers upwards into an outflow slot (995), wherein a bottleneck is provided in the path of flow of the separating liquid towards the outflow slot (995), such that the separating liquid is accelerated and undergoes turbulence there.

8. A device according to one of the Claims 1 to 4, **characterised in that** the channel (1040) and/or the associated drainage surface (1070a, 1070b) is provided with a groove structure (1099), preferably made of a synthetic or rubber material, the grooves whereof extend in the longitudinal direction of the channel (1040).

9. A device according to Claim 2, **characterised in that** the discharge means (282) includes at least one roller (215, 217) projecting into the channel (225) and rotatable about an axis of rotation (219, 221) which runs parallel to the longitudinal direction of the channel (225), such that separating liquid in the channel (225) is carried upwards by the rotating roller (215, 217), wherein the drainage surface (231, 233) is the surface of a stripping element (231, 233), in particular of a resilient plate (231, 233), which bears in the longitudinal direction of the roller (215, 217) against the outer surface thereof such that separating liquid carried along by the roller (215, 217) is stripped off and flows away over the surface of the stripping element (231, 233), in direction of the separating surface (42a, 42b; 142a, 142b).

10. A device according to one of the Claims 1 to 9, **characterised in that** the separating liquid is supplied to the channel (40; 140; 225; 355; 455; 555; 655; 755; 890; 990; 1040; R3) at below the outflow level.

11. A device according to Claim 10, **characterised in that** in the channel (40; 140; 225; 355; 455; 555; 655; 755; 890; 1040), in the longitudinal direction thereof, at least one pipe (373a, 373b, 373c; 473a, 473b, 473c; 573a, 573b, 573c) is arranged on which separating liquid may act and which is provided with a plurality of outlet openings along the longitudinal extent thereof.

12. A device according to one of the Claims 1 to 11, **characterised in that** the horizontal position of the channel (355; 455; 555; 655; 755; R3) in relation to a component (301; 401; 501; 686; 701) carrying it is variable.

13. A device according to one of the Claims 2 to 12 with reference back to Claim 2, **characterised in that** the horizontal position of the drainage surface (231, 233; 365, 367; 465, 467; 565, 567; 665, 667; 765, 767; M1, M2, M3a, M3b) associated with the channel (225; 355; 455; 555; 655; 755; R3) in relation to a component (201, 225; 301; 401; 501; 686; 701) carrying it is variable.

14. A device according to Claim 12 or 13, **characterised in that** the channel (655) and/or a component (665, 667) defining the drainage surface (665, 667) is/are mounted to be floating as a result of a carrier fluid.

15. A device according to one of the Claims 2 to 14 with reference back to Claim 2, **characterised in that** a compressed air means (479a, 479b) is provided in the channel (455) and may be used to blow compressed air, below the outflow level, from below onto the separating liquid level, such that waves are produced in the separating liquid in the region of the drainage surface (465, 467).

16. A device according to one of the Claims 1 to 15, **characterised in that** a distributing medium (581), in particular a porous material, through which separating liquid may flow, is arranged in the channel (555) in the longitudinal direction thereof.

17. A device according to Claim 1 or 2, **characterised in that** the channel (R3) takes the form of a pipe (R3) having an upwardly pointing overflow slot (S3) which runs along the longitudinal extent of the pipe, wherein below the pipe (R3) at least one further pipe (R1, R2) is arranged such that separating liquid flowing out of the upper pipe (R3) passes over the outer surface (M3a, M3b) thereof and reaches the outer surface (M1, M2) of the lower pipe (R1, R2) and from there flows further to the separating surface (42a, 42b; 142a, 142b).

18. A device according to Claim 17, **characterised in that** the lower pipe (R1, R2) is chargeable with separating liquid and has an outlet slot (S1, S2) which runs along its longitudinal extent, by which separating liquid is dischargeable in the direction of the separating surface (42a, 42b; 142a, 142b).

## Revendications

1. Dispositif dévolu à la séparation d'un brouillard de laque excédentaire d'avec l'air, chargé de brouillard excédentaire, s'échappant de cabines d'installations de laquage, comprenant
a) au moins une surface de séparation (42a, 42b ; 142a, 142b) le long de laquelle l'air s'échappant des cabines peut être guidé, et qui est raccordée à un pôle d'une source (74 ; 174) de haute tension ;
b) un dispositif (56 ; 156) à électrode qui est situé dans le courant d'air, est associé à ladite surface de séparation (42a, 42b ; 142a, 142b) et est raccordé à l'autre pôle de ladite source (74 ; 174) de haute tension ;
c) des moyens à l'aide desquels le brouillard de laque excédentaire séparé est évacué de ladite surface de séparation (42a, 42b ; 142a, 142b),
**caractérisé par le fait**
d) **que** les moyens, conçus pour évacuer le brouillard de laque excédentaire de la surface de séparation (42a, 42b ; 142a, 142b), comprennent un liquide séparateur s'écoulant de haut en bas au-dessus de ladite surface de séparation (42a, 42b ; 142a, 142b) ;
e) **qu'**un système de distribution (82 ; 182 ; 282 ; 382 ; 482 ; 582 ; 682 ; 782 ; 882 ; 982 ; 1082 ; 1182) est pourvu d'une rigole (40 ; 140 ; 225 ; 355 ; 455 ; 555 ; 655 ; 755 ; 890 ; 990 ; 1040 ; R3) ouverte vers le haut, dont ce liquide séparateur délivré sort le long de l'étendue longitudinale de ladite rigole lorsque le niveau dudit liquide séparateur excède un niveau de sortie, dans ladite rigole, et parvient ainsi jusqu'à la surface de séparation (42a, 42b ; 142a, 142b) de façon telle que ledit liquide séparateur s'écoule vers le bas, sur ladite surface de séparation (42a, 42b ; 142a, 142b), sous la forme d'une couche amplement cohérente.

2. Dispositif selon la revendication 1, **caractérisé par le fait que** le système de distribution (82 ; 182 ; 282 ; 382 ; 482 ; 582 ; 682 ; 782 ; 882 ; 982 ; 1082 ; 1182) inclut une surface d'écoulement (70a, 70b ; 170a, 170b ; 231, 233 ; 365, 367 ; 465, 467 ; 565, 567 ; 665, 667 ; 765, 767 ; 870a, 870b ; 994a, 994b ; 1070a, 1070b ; M1, M2, M3a, M3b) associée à la rigole (40 ; 140 ; 225 ; 355 ; 455 ; 555 ; 655 ; 755 ; 890 ; 990 ; 1040 ; R3), s'étendant parallèlement à cette dernière et par l'intermédiaire de laquelle le liquide séparateur, sortant de ladite rigole (40 ; 140 ; 225 ; 355 ; 455 ; 555 ; 655 ; 755 ; 890 ; 990 ; 1040 ; R3), s'écoule latéralement en direction de la surface de séparation (42a, 42b ; 142a, 142b).

3. Dispositif selon la revendication 2, **caractérisé par le fait que** la surface d'écoulement (365, 367 ; 465, 467 ; 565, 567 ; 665, 667 ; 765, 767) fusionne dans le bord de la rigole (355 ; 455 ; 555 ; 655 ; 755), le long de cette dernière.

4. Dispositif selon la revendication 2 ou 3, **caractérisé par le fait que** la surface d'écoulement (365, 367 ; 465, 467 ; 565, 567 ; 665, 667 ; 765, 767) comporte un premier tronçon (365a, 367a ; 465a, 467a ; 565a, 567a ; 665a, 667a ; 765a, 767a) incliné vers l'extérieur et vers le haut, qui fusionne dans un second tronçon (365b, 367b ; 465b, 467b ; 565b, 567b ; 665b, 667b ; 765b, 767b) s'étendant dans un plan horizontal.

5. Dispositif selon l'une des revendications 2 à 4, **caractérisé par le fait que** la surface d'écoulement (765, 767) porte un élément muni de brosses (788, 789).

6. Dispositif selon l'une des revendications 1 à 4, **caractérisé par le fait que** des parois (891a, 891b) essentiellement verticales sont implantées au-dessus des bords de la rigole (890) de manière qu'il subsiste, entre lesdites parois, une fente respective (892a, 892b) s'étendant dans la direction longitudinale de ladite rigole (890).

7. Dispositif selon l'une des revendications 1 à 4, **caractérisé par le fait que** la rigole (990) s'amenuise vers le haut jusqu'à une fente de décharge (995), une zone rétrécie étant prévue, sur le trajet de circulation du liquide séparateur vers ladite fente de décharge (995), de telle sorte que ledit liquide séparateur soit accéléré et animé de tourbillons dans ladite zone.

8. Dispositif selon l'une des revendications 1 à 4, **caractérisé par le fait que** la rigole (1040), et/ou la surface d'écoulement (1070a, 1070b) associée, présente(nt) une structure rainurée (1099) de préférence constituée d'une matière plastique ou d'un caoutchouc, dont les rainures s'étendent dans la direction longitudinale de ladite rigole (1040).

9. Dispositif selon la revendication 2, **caractérisé par le fait que** le système de distribution (282) inclut au moins un rouleau (215, 217) qui s'engage dans la rigole (225) et est apte à tourner autour d'un axe de rotation (219, 221) s'étendant parallèlement à la direction longitudinale de ladite rigole (225), de façon telle que du liquide séparateur situé dans ladite rigole (225) soit entraîné vers le haut par ledit rouleau (215, 217) accomplissant une rotation, la surface d'écoulement (231, 233) constituant alors la surface d'un élément racleur (231, 233), en particulier d'une tôle élastique (231, 233) appliquée contre la surface de l'enveloppe extérieure dudit rouleau (215, 217), dans la direction longitudinale de ce dernier, de telle sorte que du liquide séparateur entraîné par ledit rouleau (215, 217) soit dissocié par raclement, puis s'écoule en direction de la surface de séparation (42a, 42b ; 142a, 142b) par l'intermédiaire de la surface dudit élément racleur (231, 233).

10. Dispositif selon l'une des revendications 1 à 9, **caractérisé par le fait que** le liquide séparateur est délivré à la rigole (40 ; 140 ; 225 ; 355 ; 455 ; 555 ; 655 ; 755 ; 890 ; 990 ; 1040 ; R3) au-dessous du niveau de sortie.

11. Dispositif selon la revendication 10, **caractérisé par le fait qu'**au moins une tubulure (373a, 373b, 373c ; 473a, 473b, 473c ; 573a, 573b, 573c), logée dans la rigole (40 ; 140 ; 225 ; 355 ; 455 ; 555 ; 655 ; 755 ; 890 ; 1040) dans la direction longitudinale de cette dernière, peut être sollicitée par du liquide séparateur et est munie de plusieurs orifices de sortie le long de son étendue longitudinale.

12. Dispositif selon l'une des revendications 1 à 11, **caractérisé par le fait que** la position horizontale de la rigole (355 ; 455 ; 555 ; 655 ; 755 ; R3) peut être modifiée par rapport à une pièce structurelle (301 ; 401 ; 501 ; 686 ; 701) portant cette dernière.

13. Dispositif selon l'une des revendications 2 à 12 avec renvoi à la revendication 2, **caractérisé par le fait que** la position horizontale de la surface d'écoulement (231, 233 ; 365, 367 ; 465, 467 ; 565, 567 ; 665, 667 ; 765, 767 ; M1, M2, M3a, M3b), associée à la rigole (225 ; 355 ; 455 ; 555 ; 655 ; 755 ; R3), peut être modifiée par rapport à une pièce structurelle (201, 225 ; 301 ; 401 ; 501 ; 686 ; 701) portant ladite rigole.

14. Dispositif selon la revendication 12 ou 13, **caractérisé par le fait que** la rigole (655), et/ou une pièce structurelle (665, 667) prédéfinissant la surface d'écoulement (665, 667), est (sont) montée(s) flottante(s) au moyen d'un fluide porteur.

15. Dispositif selon l'une des revendications 2 à 14 avec renvoi à la revendication 2, **caractérisé par** la présence, dans la rigole (455), d'un système (479a, 479b) à air comprimé au moyen duquel de l'air comprimé peut être insufflé de bas en haut sur la surface du liquide séparateur, au-dessous du niveau de sortie, de telle sorte que des ondes soient engendrées, dans ledit liquide séparateur, dans la région de la surface d'écoulement (465, 467).

16. Dispositif selon l'une des revendications 1 à 15, **caractérisé par le fait qu'**un agent répartiteur (581), en particulier un matériau poreux logé dans la rigole (555) dans la direction longitudinale de cette dernière, peut être traversé par un flux de liquide séparateur.

17. Dispositif selon la revendication 1 ou 2, **caractérisé par le fait que** la rigole (R3) est réalisée sous la forme d'une tubulure (R3) dotée d'une fente de trop-plein (S3) orientée vers le haut et s'étendant le long de l'étendue longitudinale de ladite tubulure, au moins une tubulure supplémentaire (R1, R2) étant implantée au-dessous de ladite tubulure (R3), de sorte que du liquide séparateur sortant de la tubulure supérieure (R3) parvient, par l'intermédiaire de la surface (M3a, M3b) de l'enveloppe extérieure de cette dernière, jusqu'à la surface (M1, M2) de l'enveloppe extérieure de la tubulure inférieure (R1, R2), à partir de laquelle son écoulement se poursuit vers la surface de séparation (42a, 42b ; 142a, 142b).

18. Dispositif selon la revendication 17, **caractérisé par le fait que** la tubulure inférieure (R1, R2) peut être alimentée en liquide séparateur et présente une fente de décharge (S1, S2) qui s'étend le long de son étendue longitudinale, et par l'intermédiaire de laquelle du liquide séparateur peut être distribué en direction de la surface de séparation (42a, 42b ; 142a, l42b).
